# EUROPÄISCHE PATENTSCHRIFT

(11) **EP 0 927 918 B1**
(45) Veröffentlichungstag und Bekanntmachung des Hinweises auf die Patenterteilung: **11.01.2006**
(21) Anmeldenummer: 98124873.5
(22) Anmeldetag: 30.12.1998
(51) Int. Cl.: G05B 19/4061, G05B 19/4062

(54) **Vorrichtung zum Überwachen einer entlang eines vorgegebenen Weges bewegbaren Einrichtung sowie Modulatoreinheit und Auswerteeinheit für diese Vorrichtung**
Device for surveillance of a unit moving along a predetermined course as well as modulation unit and evaluation unit for this device
Dispositif pour surveiller une installation se déplaçant le long d'une trajectoire predéterminée, unité de modulation et unité d'exploitation pour ce dispositif

(30) Priorität: 02.01.1998 DE 29800037 U
(43) Veröffentlichungstag der Anmeldung: 07.07.1999
(73) Patentinhaber: Aso GmbH Antriebs- und Steuerungstechnik, 33154 Salzkotten (DE)
(72) Erfinder: Hüllwegen, Josef, 33184 Altenbeken (DE)
(74) Vertreter: Holland, Ralf

(56) Entgegenhaltungen:
- EP-A- 0 092 773
- EP-A- 0 404 962
- US-A- 5 204 603
- US-A- 5 271 092

## Beschreibung

Die Erfindung betrifft eine Vorrichtung zum Überwachen einer vorzugsweise entlang eines vorgegebenen Weges bewegbaren Einrichtung, beispielsweise eines Roll-, Schiebetores oder einer Aufzugstür. Die Vorrichtung enthält einen Signalgenerator zum Erzeugen eines Trägersignals mit fester Frequenz. In einer Modulatoreinheit wird ein Modulationssignal zum Modulieren des Trägersignals beispielsweise abhängig vom Schaltzustand mindestens eines im vorgegebenen Weg angeordneten Schalters erzeugt. Eine elektrische Kopplungsvorrichtung ist zwischen Modulatoreinheit und einer Auswerteeinrichtung zum Auswerten des modulierten Trägersignals angeordnet. Außerdem enthält die Vorrichtung vorzugsweise eine Schalteinrichtung, die eine Antriebsvorrichtung zum Bewegen der bewegbaren Einrichtung wirksam oder unwirksam schaltet.

Bei einer betriebs intern bekannten Vorrichtung mit zwei Schaltern wird in der Modulatoreinheit die Pulsweite des Modulationssignals abhängig vom Zustand der beiden Schalter verändert. Ist keiner der beiden Schalter geschlossen, so beträgt das Puls-Pausenverhältnis 1:1. Ist der eine oder der andere Schalter geschlossen, so beträgt das Puls-Pausenverhältnis entweder 1:3 oder 3:1. Ein Betriebszustand, in dem beide Schalter geschlossen sind und getrennt ausgewertet werden können, ist bei der bekannten Vorrichtung nicht vorgesehen. Die bekannte Vorrichtung hat eine schaltungstechnisch aufwendige Modulatoreinheit; weil sich die unterschiedlichen Puls-Pausenverhältnisse nur mit einem vergleichsweise großen Schaltungsaufwand realisieren lassen. Die Auswerteeinrichtung ist bei der bekannten Vorrichtung ebenfalls aufwendig, so daß zum Erfassen der verschiedenen Puts-Pausenverhältnisse ein Rechnerschaltkreis verwendet werden muß.

Es ist Aufgabe der Erfindung eine einfach aufgebaute Vorrichtung zum Überwachen einer bewegbaren Einrichtung anzugeben.

Diese Aufgabe wird durch eine Vorrichtung mit den Merkmalen des Anspruchs 1 gelöst. Weiterbildungen sind in den Unteransprüchen angegeben.

Bei der Erfindung ist die Modulatoreinheit so aufgebaut, daß das Trägersignal bei einem vom vorgegebenen Sensorsignal abweichenden Sensorsignal nicht moduliert wird. Die Auswerteeinheit erzeugt beim Erfassen des unmodulierten Trägersignals ein vom ersten Überwachungssignal abweichendes zweites Überwachungssignal. Anstelle verschiedener Puls-Pausenverhältnisse werden bei der Erfindung die Zustände Modulation EIN und Modulation AUS verwendet, um festzustellen, ob ein Hindernis im Weg der bewegbaren Einrichtung liegt. Die Erfindung geht von der Erkenntnis aus, daß es einfacher ist, festzustellen, ob eine Modulation vorliegt oder nicht, als ein Puls-Pausenverhältnis zu ermitteln. Deshalb wird das Trägersignal nur in einem Zustand des Schalters moduliert, z.B. im Normalzustand des Schalters, der anzeigt, daß sich keine Person oder kein Gegenstand im vorgegebenen Weg befindet. Die Auswerteeinheit erfaßt die Modulation und gibt das erste Überwachungssignal an die Steuereinrichtung ab. Die Steuereinrichtung erkennt an Hand des ersten Überwachungssignals, daß die Antriebsvorrichtung weiter betrieben werden kann. Trifft der Schalter auf eine Person oder einen Gegenstand, so schaltet er in eine Haltestellung um, die anzeigt, daß die Bewegung des Tores angehalten werden soll. Das Umschalten des Schalters in die Haltestellung hat zur Folge, daß das Trägersignal nun nicht mehr moduliert wird. Die Auswerteeinrichtung erfaßt das unmodulierte Trägersignal und erzeugt das zweite Überwachungssignal, woraufhin die Antriebsvorrichtung angehalten wird.

Die erfindungsgemäße Vorrichtung wird bereits bei einer einzigen Sensoreinheit vorteilhaft eingesetzt. Dem schaltungstechnischen Aufwand für die nicht zwingend erforderliche Modulation steht als Vorteil gegenüber, daß das manuelle Einstellen des Arbeitspunktes der Auswerteeinheit entfallen kann. Dieses Einstellen ist ohne Modulation erforderlich, weil je nach Länge der bewegbaren Einrichtung in der Kopplungsvorrichtung eine Dämpfung des von der Sensoreinheit kommenden Signals auftrat. Bei der erfindungsgemäßen Vorrichtung kann die Auswerteeinheit dagegen in einem sehr großen Arbeitsbereich feststellen, ob das Trägersignal moduliert oder unmoduliert ist.

In einer Weiterbildung enthält die elektrische Kopplungsvorrichtung auf der Seite der Auswerteeinheit eine erste Induktivität und auf der Seite der Modulatoreinheit eine zweite Induktivität. In dieser Weiterbildung koppelt vorzugsweise eine längs des vorgegebenen Weges verlaufende Leiterschleife die beiden Induktivitäten. Eine derartige Weiterbildung ist in der europäischen Patentanmeldung EP 0 092 773 B1 erläutert. Wird ein Teil der Leiterschleife durch ein gespanntes Stahlseil gebildet, das durch ringförmige Spulenkörper für die erste und die zweite Induktivität hindurchläuft, so entsteht eine berührungslos arbeitende Kopplungsvorrichtung, die nach dem Übertragerprinzip arbeitet.

Bei einer Weiterbildung werden zwei Modulatoreinheiten verwendet, die das Trägersignal mit unterschiedlichen Frequenzen modulieren. Die Anschlüsse von Schaltleisten oder optischen Sensoren an die Modulatoreinheiten können bei dieser Anordnung kurz sein, wenn die Modulatoreinheiten in der Nähe der Sensoren angeordnet werden. Bei einem Rolltor wird vermieden, daß lange Anschlußkabel mühsam durch den Torholm des Rolltores gezogen werden müssen.

In einer anderen Weiterbildung haben die Modulatoreinheiten den gleichen Leistungsbedarf. Werden die Modulatoreinheiten beispielsweise aus dem Trägersignat gespeist, so wird durch den gleichen Leistungsbedarf gewährleistet, daß beide Modulatoreinheiten die gleiche Versorgungsspannung haben. Bei im wesentlichen gleichem Aufbau der Modulatoreinheiten haben dann die in der Auswerteschaltung demodulierten Signale die gleichen Amplitudenwerte.

In einer nächsten Weiterbildung enthält der Signalgenerator eine Endstufe größerer Ausgangsleistung, vorzugsweise eine Gegentakt-Endstufe. Das Trägersignal kann durch diese Maßnahme zur Spannungsversorgung der Modulatoreinheit bzw. der Modulatoreinheiten verwendet werden. Auch mehrere Modulatoreinheiten können aufgrund der hohen Leistung ihre Versorgungsspannung aus dem Trägersignal beziehen. Mehrere Modulatoreinheiten lassen sich ohne größeren Aufwand in Serie schalten, wenn sie mit Hilfe weiterer Spulenkörper am Stahlseil angeordnet werden.

Die Modulatoreinheiten enthalten in einer anderen Weiterbildung ein Abschlußelement, das bei ausgeschalteter Modulation mit Hilfe einer Schaltungsvorrichtung auf der Seite der Kopplungsvorrichtung wirksam geschaltet wird. Als Abschlußelement wird ein Widerstand zur Anpassung verwendet, der so bemessen ist, daß die Modulatoreinheit unabhängig vom Vorliegen einer Modulation bzw. dem Fehlen der Modulation die gleiche Versorgungsspannung erhält. Befindet sich die Modulatoreinheit im AUS-Zustand, so wäre ohne das Hinzuschalten des Abschlußelementes die Versorgungsleistung der anderen Modulatoreinheit geringer. Ist die Versorgungsspannung zu klein, so wird diese Modulatoreinheit funktionsuntüchtig. Dies wird durch das Zuschalten des Abschlußelementes verhindert.

Wird bei einer nach dem Übertragerprinzip arbeitenden Kopplungsvorrichtung der Signalgenerator auf der Seite der Auswerteschaltung angeordnet, so kann die Modulatoreinheit auf kleinem Bauraum ausgeführt werden. Befindet sich der Signalgenerator auf der Seite der Auswerteeinheit, so kann bei einer nach dem Übertragerprinzip arbeitenden Kopplungsvorrichtung außerdem die Modulatoreinheit ohne zusätzliche Spannungsquelle direkt aus dem über die Koppelvorrichtung übertragenen Trägersignal gespeist werden. Ein Anschluß der Modulatoreinheit an eine Netzspannung oder die Versorgung über ständig zu wechselnde Batterien entfällt.

In einer anderen Weiterbildung enthält die Modulatoreinheit eine Überlagerungseinrichtung zum Überlagern mehrerer Modulationssignale. Die Modulationssignale haben vorzugsweise einen rechteckförmigen Signalverlauf. Die Frequenz der Modulationssignale ist für jede Sensoreinheit verschieden. Durch diese Maßnahme lassen sich beispielsweise die Schaltzustände von mehr als einem Schalter in der Auswerteeinrichtung getrennt erfassen. Das hat zur Folge, daß bei Bedarf für jeden Schalter eine andere Ansteuerung der Antriebsvorrichtung oder eine andere Anzeige auf einer Anzeigevorrichtung erfolgen kann. Die Überlagerungseinrichtung ist einfach aufgebaut, wenn ein NICHT-ODER-Gatter verwendet wird.

Bei einer Weiterentwicklung mit einem oder mehreren Schaltern enthält die Auswerteeinheit einen Demodulator, der das Modulationssignal bzw. die überlagerten Modulationssignale vom Trägersignal trennt. Für jedes Modulationssignal gibt es eine Synchronisierschaltung, die beim Erfassen einer bestimmten Modulationsfrequenz ein vorgegebenes Ausgangssignal ausgibt. Als Synchronisierschaltung werden sogenannte Phasenregler (phase locked loop) verwendet.

Anstelle der Synchronisierschaltung wird in einer anderen Weiterbildung eine digitale Filterschaltung verwendet. Durch das Verwenden von digitalen Filtern läßt sich der Abgleich der Synchronisiereinheiten vermeiden, der einen hohen Zeitaufwand erfordert.

In einer alternativen Weiterentwicklung mit nur einem Schalter enthält die Auswerteeinheit eine Vergleichseinheit zum Vergleich der Spannungswerte an ihren Eingängen. An dem einen Eingang der Vergleichseinheit liegt unter Zwischenschalten einer Klemmschaltung das abhängig vom Schaltzustand des Schalters modulierte oder unmodulierte Trägersignal an. Die Vergleichseinheit kann auch durch einen Transistor ersetzt werden. Am anderen Eingang der Vergleichseinheit liegt ein Referenzsignal an. Der Ausgang der Vergleichseinheit ist mit einer Signalformungseinheit verbunden, die ein Schaltsignal zum Steuern der Schalteinheit erzeugt. Die Signalformungseinheit läßt sich im wesentlichen mit zwei monostabilen Multivibratoren aufbauen. Es entsteht eine Auswerteschaltung, die nur wenige Bauelemente enthält. Außerdem gibt es bei der altemativen Weiterentwicklung keine Probleme mit einem Abgleich der Synchronisierschaltungen.

In einer Weiterbildung erzeugt die Auswerteeinheit das zweite Überwachungssignal oder ein drittes Überwachungssignal, wenn das Trägersignal nicht mehr erfaßt wird. Die Auswerteeinheit berücksichtigt in diesem Falle zusätzlich zu dem Sensorsignal der Sensoreinheit auch die Funktionsfähigkeit der Kopplungsvorrichtung, der Modulatoreinheit und des Signalgenerators. Fällt eine dieser Baugruppen aus, so wird dies von der Auswerteeinheit gemeldet. Das zweite Überwachungssignal wird z.B. zum Anhalten einer Bewegung der bewegbaren Einrichtung verwendet. Das zweite oder dritte Überwachungssignal betätigt zusätzlich beispielsweise eine optische oder akustische Wameinrichtung.

Im folgenden werden Ausführungsbeispiele der erfindungsgemäßen Vorrichtung an Hand der Zeichnungen erläutert. Darin zeigen:
- Figur 1: ein Blockschaltbild einer Vorrichtung zum Anhalten eines Rolltores,
- Figur 2: ein Blockschaltbild eines in der Vorrichtung gemäß Figur 1 verwendeten Modulators,
- Figur 3: ein Blockschaltbild einer in der Vorrichtung gemäß Figur 1 verwendeten Auswerteschaltung,
- Figur 4: Signalverläufe in der Schaltung gemäß Figur 1,
- Figur 5: Signalverläufe im Modulator gemäß Figur 2,
- Figur 6: Signalverläufe in der Auswerteeinheit gemäß Figur 3,
- Figur 7: ein Blockschaltbild einer weiteren Vorrichtung zum Anhalten eines Rolltores, wobei die Vorrichtung die Schaltzustände zweier Schalter berücksichtigt,
- Figur 8: ein Blockschaltbild eines in der Vorrichtung gemäß Figur 7 verwendeten Modulators,
- Figur 9: ein Blockschaltbild einer in der Vorrichtung gemäß Figur 7 verwendeten Auswerteschaltung,
- Figur 10: Signalverläufe im Modulator gemäß Figur 8, und
- Figur 11: Signalverläufe in der Auswerteschaltung gemäß Figur 9,
- Figur 12: ein Blockschaltbild einer zwei Modulatoreinheiten enthaltenden Vorrichtung zum Anhalten eines Rolltores,
- Figur 13: ein Blockschaltbild einer in der Vorrichtung gemäß Figur 12 verwendeten Modulatoreinheit,
- Figur 14: ein Blockschaltbild einer in der Vorrichtung gemäß Figur 12 verwendeten Auswerteschaltung, und
- Figur 15: ein Blockschaltbild einer Modulatoreinheit, die einen optischen Sensor enthält.

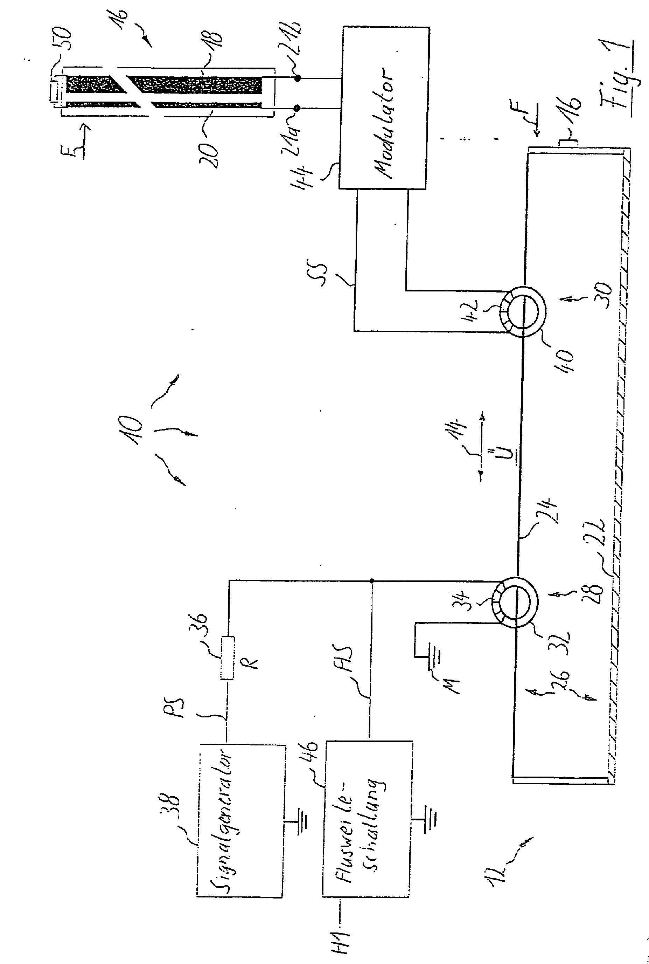

Figur 1 zeigt ein Blockschaltbild einer Vorrichtung 10 zum Anhalten eines schematisch dargestellten Rolltores 12, das beispielsweise die Ausfahrt eines Grundstücks verschließt. Das in Draufsicht dargestellte Rolltor 12 ist in die beiden durch einen Doppelpfeil 14 angedeuteten Richtungen mittels einer nicht dargestellten Antriebsvorrichtung bewegbar. An der einen Längsseite des Rolltores 12 ist eine Schaltleiste 16 in der Ausfahrt angeordnet. Die Schaltleiste 16 enthält leitende Schaltflächen 18 und 20, die durch eine Kraft F zusammengedrückt werden, falls das Rolltor beim Schließen auf ein Hindernis trifft. Die Schaltleiste 16 ist an Anschlüssen 21 a und 21 b mit einem Modulator 44 verbunden, der weiter unten noch erläutert wird.

Das Rolltor 12 öffnet sich oder wird geschlossen, wenn ein in der Nähe des Tores angebrachter Startschalter manuell betätigt wird. Alternativ oder zusätzlich kann das Betätigen des Tores auch mittels einer Fernsteuerung veranlaßt werden. Nach dem Öffnen bleibt das Rolltor 12 beispielsweise eine vorgegebene Zeit lang geöffnet, so daß ein Fahrzeug passieren kann. Nach Ablauf der vorgegebenen Zeit schließt sich das Rolltor 12 automatisch. Befindet sich zu dieser Zeit noch ein Fahrzeug oder eine Person in der Ausfahrt, so wird die Kraft F erzeugt, sobald das Tor auf die Person oder den Gegenstand trifft. Mit der in Figur 1 dargestellten Schaltung wird beim Schließen der Schaltflächen 18 und 20 das automatische Schließen des Rolltores 12 unterbrochen, bis die Schaltflächen 18 und 20 wieder in ihre Ruhestellung gelangen und ein neuer Startvorgang durchgeführt wird.

Am Torkörper 22, an dem auch die Schaltleiste 16 befestigt ist, ist ein Stahlseil 24 gespannt, das zusammen mit dem leitenden Torkörper 22 eine Leiterschleife 26 bildet. Das Stahlseil 24 verläuft durch die Ringmitten zweier Ringspulen 28 und 30. Die Ringspule 28 ist ortsfest angeordnet, so daß sich das Stahlseil 24 bei einer Bewegung des Rolltores 12 berührungslos durch die Ringspule 28 hindurch bewegt. Die Ringspule 30 bewegt sich ebenso wie die Schaltleiste 16 mit dem Rolltor 12.

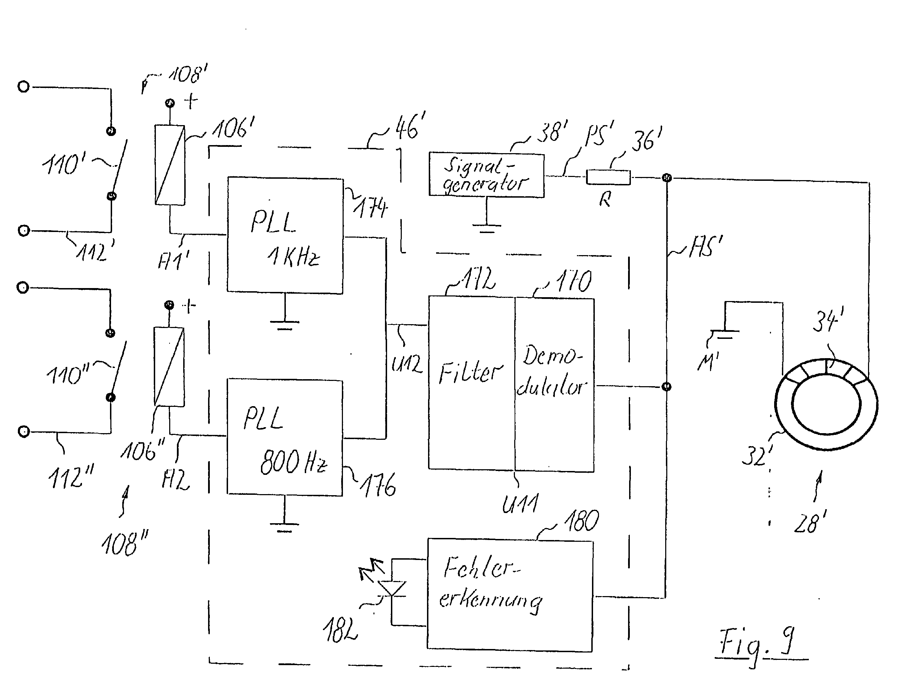

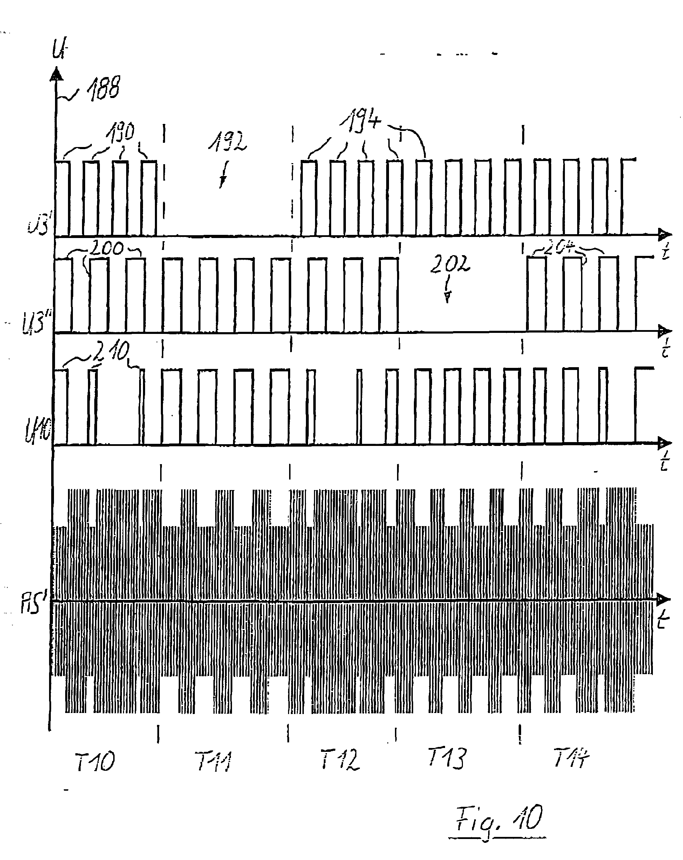

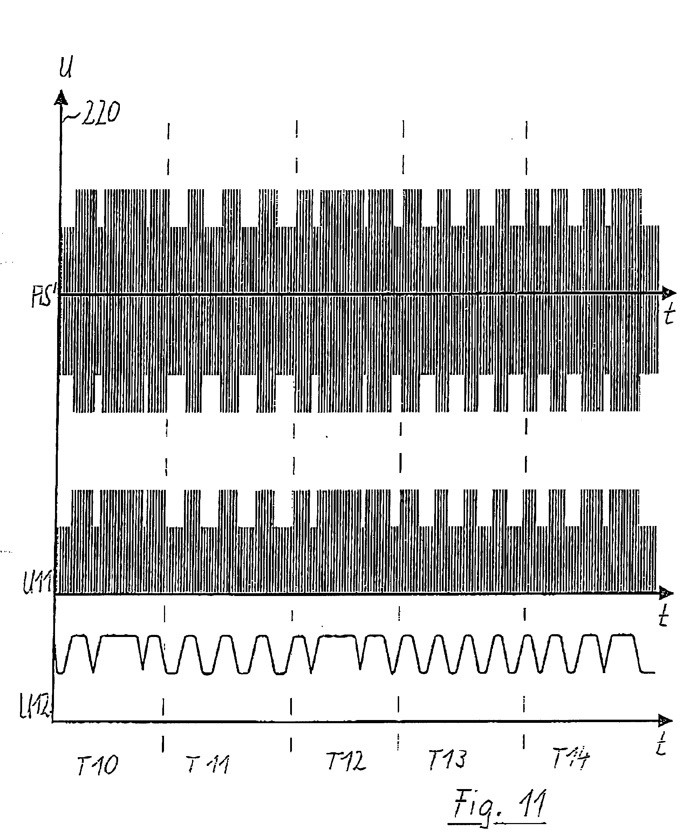

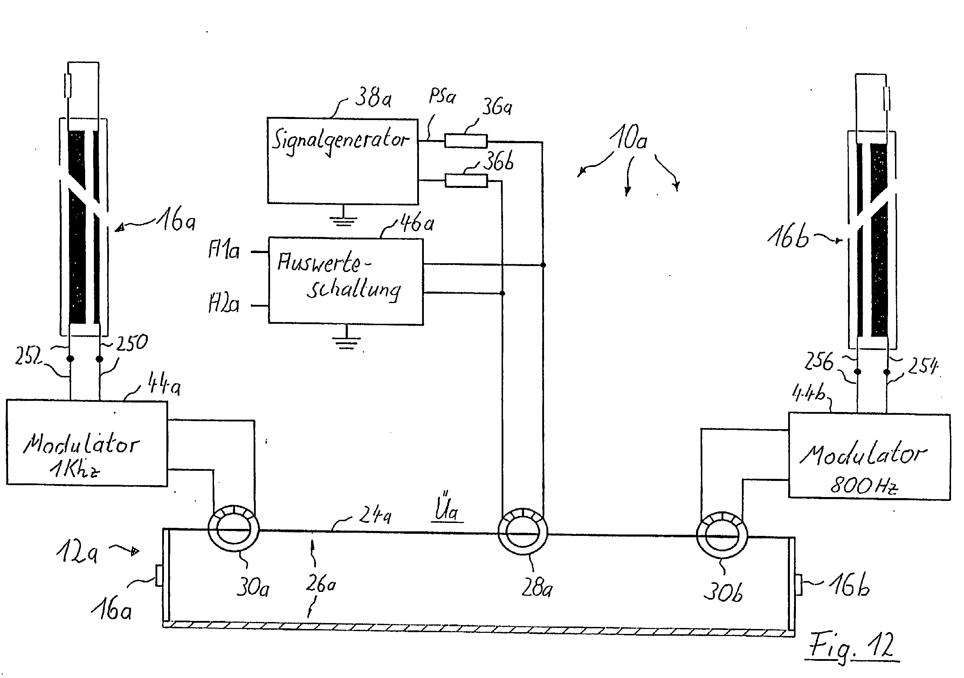

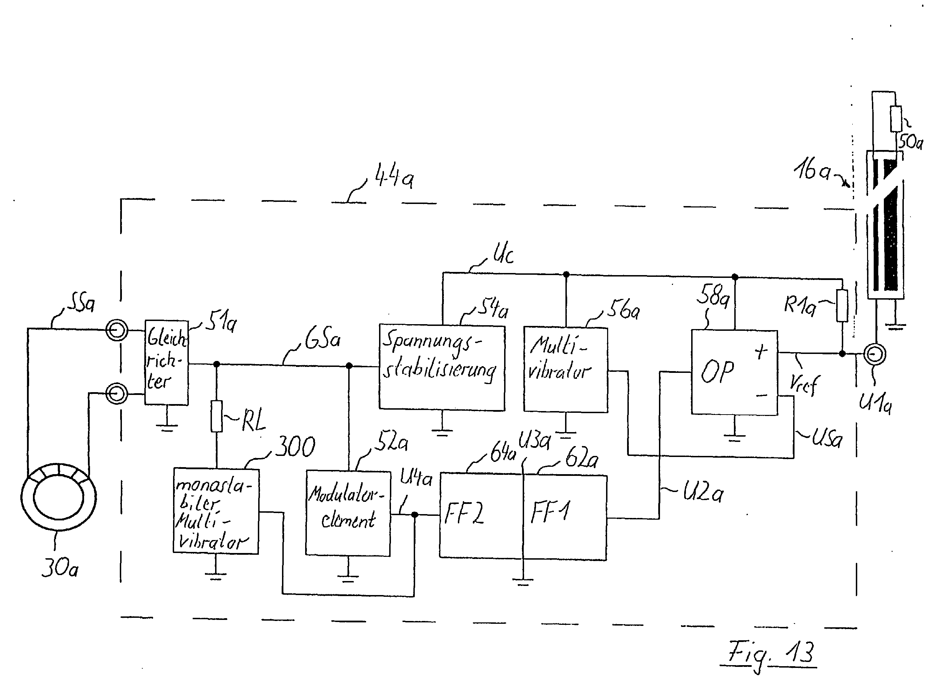

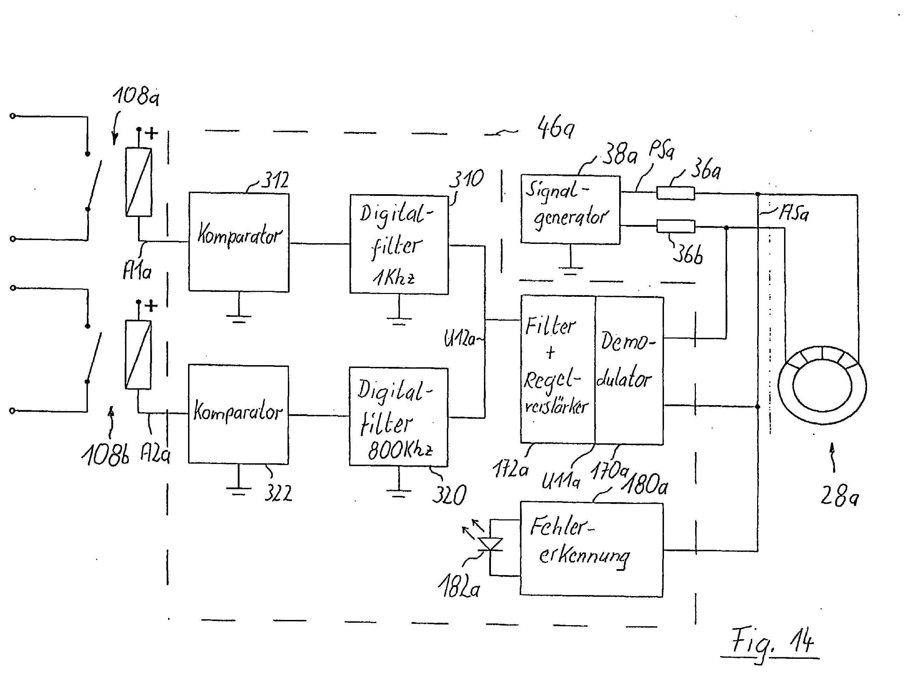

Die Ringspule 28 hat einen Kern 32, um den die Windungen einer Wicklung 34 verlaufen. Das eine Ende der Wicklung 34 ist mit einer Masseleitung M verbunden. Das andere Ende der Wicklung 34 ist mit dem einen Anschluß eines Anpassungswiderstandes 36 verbunden. Der andere Anschluß des Anpassungswiderstandes 36 ist mit dem Ausgang eines Signalgenerators 38 verbunden. Im Signalgenerator 38 wird ein sinusförmiges Primärsignal PS mit einer Trägerfrequenz von beispielsweise 10kHz erzeugt, vgl. auch Figur 4.

Die Ringspule 30 hat auf einem ebenfalls Kern 40 Windungen einer Wicklung 42. Die beiden Enden der Wicklung 42 werden im Modulator 44 im Takt einer Modulationsfrequenz f1 von beispielsweise 1 kHz kurzgeschlossen, falls die Schaltleiste 16 in ihrem Normalzustand ist, in dem sich die Schaltflächen 18 und 20 nicht berühren und in dem der Stromkreis durch die Schaltleiste 16 und mit einem Lastwiderstand 50 geschlossen ist.

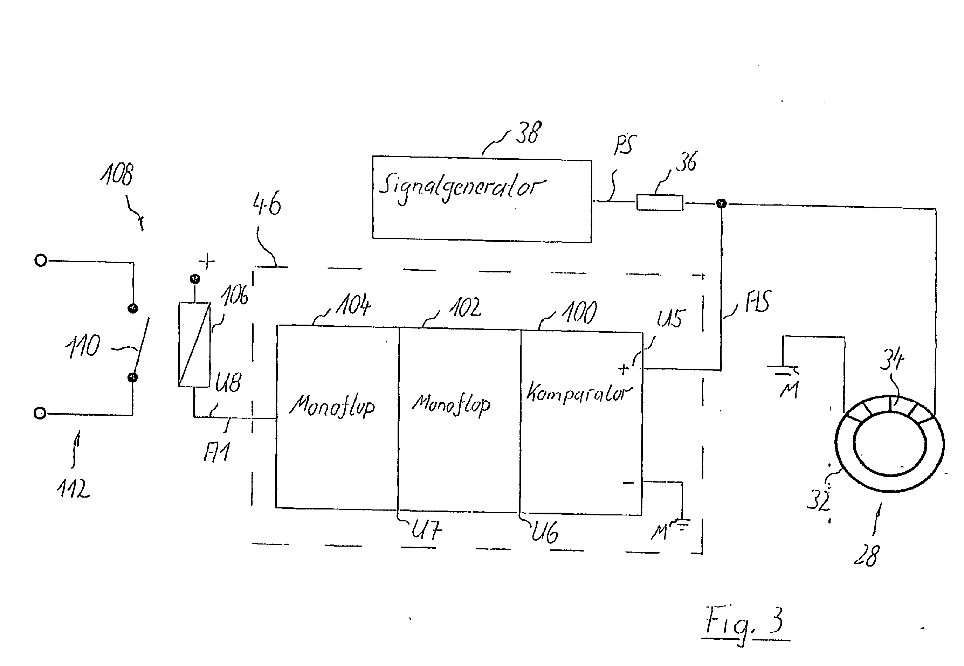

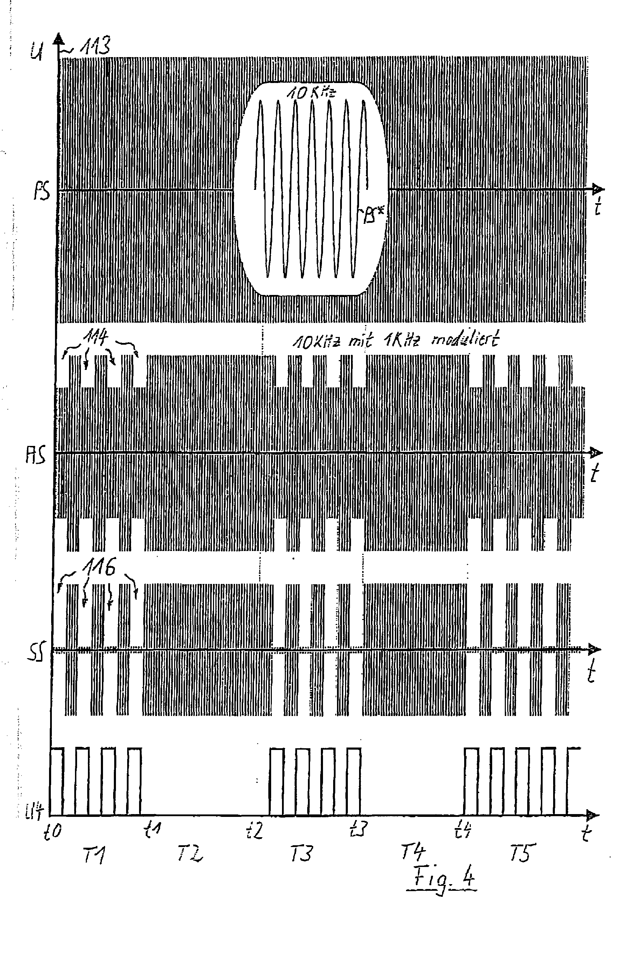

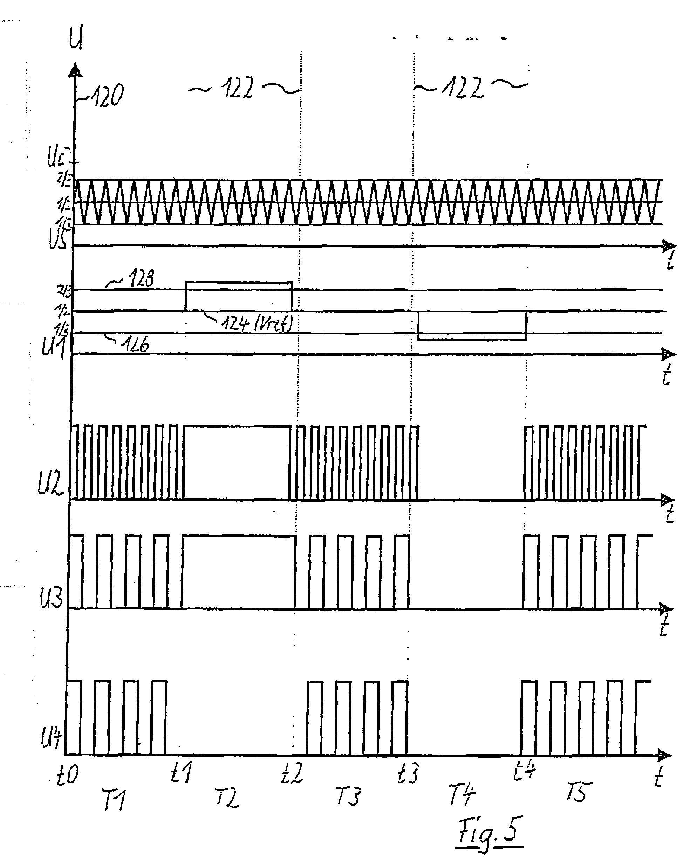

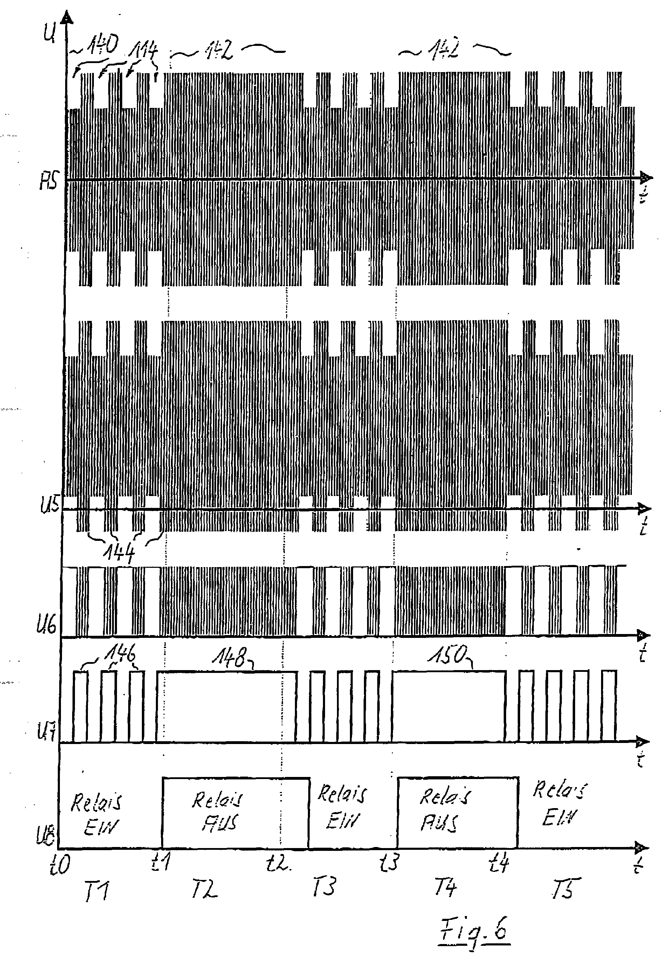

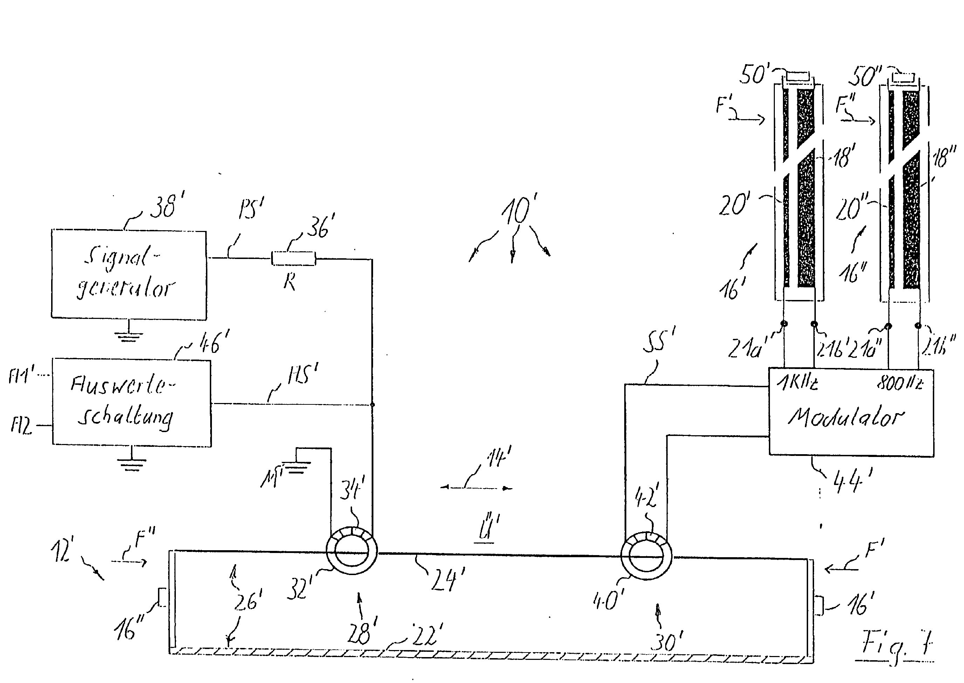

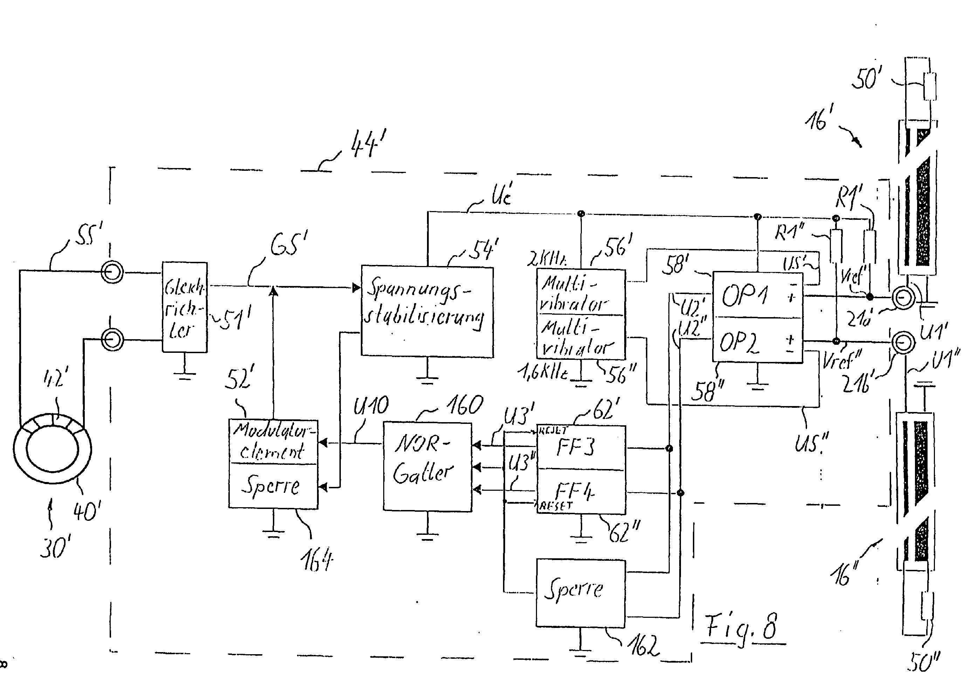

Die Ringspulen 28 und 30 sowie die Leiterschleife 26 bilden einen Übertrager Ü, über den der Modulator 44 auf das Primärsignal PS wirkt und ein Auswertesignal AS an der Ringspule 28 erzeugt. An der Ringspule 30 liegt ein Sekundärsignal SS an. Der Modulator 44 moduliert im Normalzustand der Schaltleiste 16 das Primärsignal PS, so daß ein moduliertes Sekundärsignal SS erzeugt wird, vgl. auch Figur 4. Eine Auswerteschaltung 46 erfaßt, ob das an ihrem Eingang anliegende Auswertesignal durch den Modulator 44 moduliert wird. Ist dies der Fall, so wird an einem Ausgang A1 eine Spannung ausgegeben, die ein in Figur 3 dargestelltes Relais 108 in seinem Arbeitszustand hält. Im Arbeitszustand ist die Antriebsvorrichtung des Rolltores 12 wirksam.

Werden die Schaltflächen 18, 20 der Schaltleiste 16 durch die Kraft F geschlossen, so wird das Primärsignal PS nicht mehr moduliert. Am Eingang der Auswerteschaltung 46 liegt das unmodulierte Primärsignal PS als Auswertesignal AS an. Die Auswerteschaltung 46 erfaßt das Fehlen der Modulation und gibt am Ausgang A1 eine Spannung von plus 12 Volt aus. Das Relais 108 am Ausgang der Auswerteschaltung 46 fällt ab und unterbricht beispielsweise die Energiezufuhr zur Antriebseinrichtung des Rolltores 12, so daß das Rolltor 12 stehen bleibt.

Ein hochohmiger Lastwiderstand 50 verbindet die Schaltflächen 18 und 20 der Schaltleiste 16. Ist der Lastwiderstand 50 aufgrund einer Unterbrechung in den Schaltflächen 18 oder 20 selbst bzw. in den Zuleitungen zum Modulator 44 nicht mehr wirksam, so wird im Modulator 44 die Modulation eingestellt. Durch diese Maßnahme wird einem Fehlbetrieb der Vorrichtung 10 vorgebeugt.

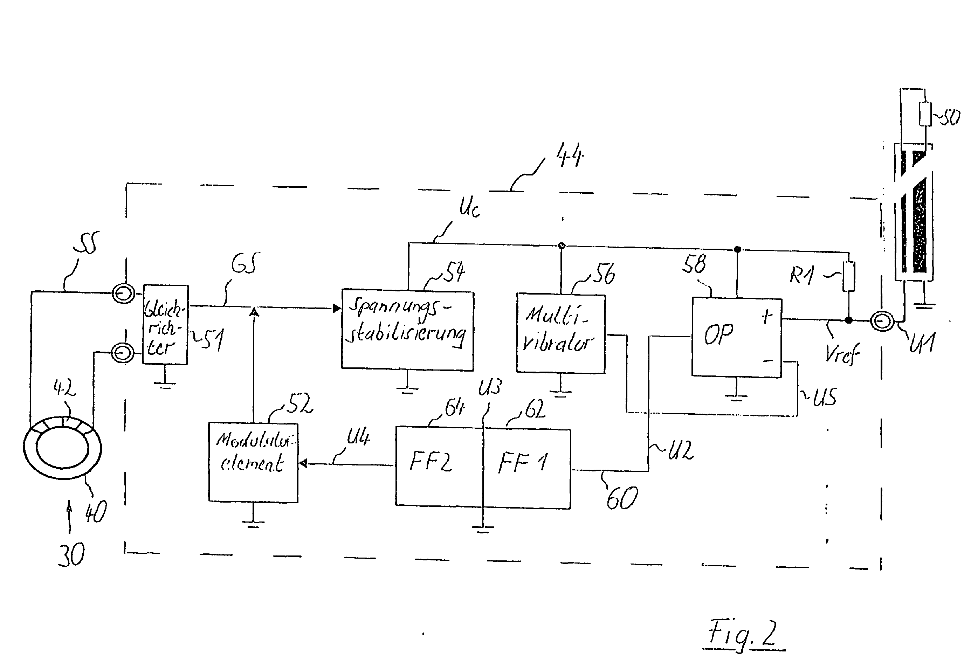

Figur 2 zeigt ein Blockschaltbild des Modulators 44. Das Sekundärsignal SS wird mittels eines Brücken-Gleichrichters 51 gleichgerichtet. Mit einem unten noch näher erläuterten Modulatorelement 52 kann das gleichgerichtete Sekundärsignal GS gegen Masse kurzgeschlossen werden. Dieser Kurzschluß wirkt sich über den Gleichrichter 51 zurück direkt auf die Ringspule 30 aus. Letztlich werden durch das Modulatorelement 52 die Anschlüsse der Wicklung 42 kurzgeschlossen.

Das gleichgerichtete Sekundärsignal GS wird im Modulator 44 einer Stabilisierschaltung 54 zugeführt, die unabhängig davon, ob das gleichgerichtete Sekundärsignal GS moduliert oder unmoduliert ist, eine hinreichend stabile Versorgungsspannung Uc erzeugt. Eine zusätzliche Spannungsversorgung des Modulators 44 durch eine Batterie oder ein Netzteil entfällt somit.

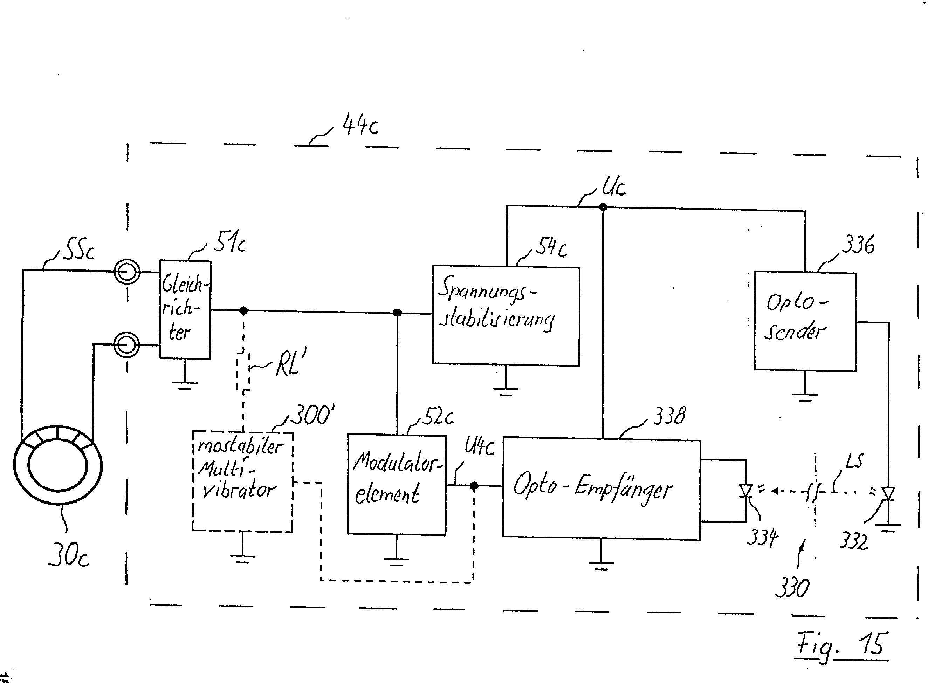

Der Modulator 44 enthält einen Multivibrator 56, der eine Sägezahnspannung US mit einer Frequenz von 2 kHz erzeugt. Der genaue Verlauf der Sägezahnspannung US wird unten an Hand der Figur 5 erläutert. Die Sägezahnspannung US liegt am negativen Eingang eines als Komparator arbeitenden Operationsverstärkers 58 an. Am positiven Eingang des Operationsverstärkers 58 wird mittels eines Spannungsteilers aus einem Widerstand R1 und dem Lastwiderstand 50 eine positive Referenzspannung Vref erzeugt, die etwa den Mittelwert der Sägezahnspannung US hat. Die Spannung am positiven Eingang des Operationsverstärkers 58 weicht von der Referenzspannung Vref ab, wenn die Schaltleiste 16 betätigt wird, oder wenn eine Unterbrechung des durch die Schaltleiste 16 und den Lastwiderstand 50 gebildeten Stromkreises auftritt. Deshalb wird die tatsächliche Spannung am positiven Eingang des Operationsverstärkers 58 als Spannung U1 bezeichnet, vgl. auch Figur 5.

Der Ausgang des Operationsverstärkers 58 ist über eine Leitung 60 mit einem Flipflop 62 verbunden. Die Spannung am Ausgang des Operationsverstärkers 58 wird als U2 bezeichnet, vgl. auch Figur 5. Am Ausgang des Flipflops 62 liegt eine rechteckförmige Spannung U3 an, vgl. auch Figur 5. Die Spannung U3 hat bei wirksamer Modulation nur noch eine Frequenz von 1 kHz, weil das Flipflop 62 als Teiler arbeitet. Der Ausgang des Flipflops 62 ist mit dem Eingang eines Flipflops 64 verbunden, so daß die beiden Flipflops 62 und 64 in Reihe geschaltet sind. Am Ausgang des Flipflops 64 entsteht eine Spannung U4, vgl. auch Figur 5. Der Ausgang des Flipflops 64 ist direkt mit dem Modulatorelement 52 verbunden.

Die Flipflops 62 und 64 sind so beschaltet, daß die Spannung U4 nur dann rechteckförmig ist, wenn die Schaltleiste 16 in ihrem Normalzustand ist. Ist die Schaltleiste 16 gedrückt oder ist der Stromkreis durch die Schaltleiste 16 unterbrochen, so hat die Spannung U4 den Wert 0 Volt, und das Modulatorelement 52 schaltet nicht. Das bedeutet, daß in diesen Fällen keine Modulation des Sekundärsignals SS auftritt. Aufgrund der Kopplung mittels Übertrager Ü, vgl. Figur 1, tritt auch an der Auswerteschaltung 46 keine Modulation des Auswertesignals AS auf, vgl. Figur 1.

Figur 3 zeigt ein Blockschaltbild der Auswerteschaltung 46. Das Auswertesignal AS wird an den positiven Eingang eines Komparators 100 unter Zwischenschaltung einer nicht dargestellten Klemmschaltung angelegt. Solche Klemmschaltungen sind aus der Fernsehtechnik bekannt. Sie haben die Aufgabe, einen Spannungshub zu erzeugen. Das so angehobene Auswertesignal AS hat einen Spannungsverlauf U5, vgl. auch Figur 6. Der negative Eingang des Komparators 100 ist mit der Masseleitung M verbunden. Am Ausgang des Komparators 100 liegt eine Spannung U6 an, vgl. auch Figur 6. Die Wirkungsweise des Komparators 100 wird ebenfalls unten an Hand der Figur 6 erläutert.

Der Ausgang des Komparators 100 ist mit dem Eingang eines ersten Monoflops 102 verbunden, das mit einer fallenden Taktflanke seinen Ausgang auf H-Pegel schaltet, bis eine vorgegebene Schaltzeit abgelaufen ist, die etwa der Periodendauer des Primärsignals PS mit der Frequenz von 10 kHz entspricht, d.h. etwa 100 µs. Am Ausgang des Monoflops 102 liegt ein Spannungsverlauf U7 an, vgl. Figur 6.

Der Ausgang des Monoflops 102 ist mit dem Eingang eines Monoflops 104 verbunden, das ebenfalls mit einer fallenden Taktflanke an seinem Eingang den Ausgang auf H-Pegel schaltet. Die Schaltzeit des Monoflops 104 entspricht etwa der Periodendauer des Modulationssignals von 1 kHz, d.h. einer Zeit von etwa 1 ms. Am Ausgang des Monoflops 104 entsteht ein Spannungsverlauf, der unten an Hand der Figur 6 näher erläutert wird.

Der invertierende Ausgang A1 des Monoflops 104 mit einem Spannungsverlauf U8, vgl. Figur 6, ist mit dem einen Anschluß einer Ankerspule 106 des Relais 108 verbunden. Der andere Anschluß der Ankerspule 106 ist mit der positiven Betriebsspannung der Auswerteschaltung 46 verbunden. Hat der invertierende Ausgang A1 des Monoflops 104 L-Pegel, d.h. 0 Volt, so schließt ein Arbeitskontakt 110 einen Arbeitskreis 112, der die Antriebsvorrichtung des Rolltores 12, vgl. Figur 1, wirksam schaltet. Hat dagegen der invertierende Ausgang A1 des Monoflops 104 H-Pegel, so ist der Arbeitskontakt 110 geöffnet. Die Antriebsvorrichtung des Rolltores 12 und damit auch die Bewegung des Rolltores 12 selbst werden angehalten. Dies erfolgt immer dann, wenn das Auswertesignal AS nicht mehr moduliert wird. Dies ist der Fall, wenn die Schaltleiste 16, vgl. Figur 1, gedrückt wird, der Stromkreis durch die Schaltleiste 16 unterbrochen ist oder wenn der Übertrager Ü oder der Modulator 44 fehlerhaft arbeitet. Das Auswertesignal AS wird auch nicht moduliert, wenn aufgrund eines defekten Signalgenerators 38 das Primärsignal PS nicht erzeugt wird.

Figur 4 zeigt Signalverläufe in der Schaltung gemäß Figur 1, so daß beim Erläutern der Figur 4 auch auf die Figur 1 Bezug genommen wird. Figur 4 zeigt in der Reihenfolge von oben nach unten die Spannungsverläufe des Primärsignals PS, des Auswertesignals AS, des Sekundärsignals SS und der Spannung U4, vgl. Figur 2. Die Spannungswerte U der Spannungsverläufe sind jeweils auf einer gemeinsamen Ordinatenachse 113 abgetragen. Auf den Abszissenachsen ist jeweils die Zeit t abgetragen.

Im oberen Koordinatensystem der Figur 4 ist der Verlauf des Primärsignals PS dargestellt. Das Primärsignal PS ist ein Sinussignal mit einer Frequenz von 10 kHz, vgl. die Vergrößerung PS*. Aus dem Primärsignal PS wird durch Modulation das Auswertesignal AS erzeugt.

Das Auswertesignal AS ist im zweiten Koordinatensystem von oben in der Figur 4 dargestellt. Das Auswertesignal AS hat eine Trägerfrequenz von 10 kHz, die mit der Modulationsfrequenz von 1 kHz moduliert ist. Der Modulationsgrad beträgt etwa 40 %, aufgrund der Dämpfungswirkung im Übertrager Ü, vgl. Figur 1. Durch die Modulation kommt es zu einer zeitweisen Verringerung der Amplitude des Trägersignals, vgl. Modulationslücken 114.

Das Sekundärsignal SS ist in einem Koordinatensystem unterhalb des Koordinatensystems für das Auswertesignal AS dargestellt. Am Modulator 44 beträgt der Modulationsgrad etwa 100 %. Das Trägersignal des Sekundärsignals SS mit einer Frequenz von 10 kHz wird deshalb synchron zur Modulationsfrequenz von 1 kHz in seiner Amplitude bis auf etwa 0 Volt beschnitten. Dabei entstehen Modulationslücken 116.

Ein Spannungsverlauf U4 im untersten Koordinatensystem der Figur 4 zeigt zum besseren Verständnis die Spannung am Modulatorelement 52 bzw. am Ausgang des Flipflops 64, vgl. Figur 2. Es wird moduliert, sobald die Spannung am Ausgang des Flipflops 64 einen hohen Spannungswert hat. Liegt die Spannung U4 auf dem Wert 0 Volt, so findet keine Modulation statt.

Beim Erläutern der Figuren 4, 5 und 6 wird auf fünf Zeitabschnitte T1 bis T5 Bezug genommen. Der Zeitabschnitt T1 beginnt zu einem Zeitpunkt t0 und endet zu einem Zeitpunkt t1. An den Zeitabschnitt T1 schließen sich die Zeitabschnitte T2 bis T5 in dieser Reihenfolge an. Der Zeitabschnitt T2 beginnt somit zum Zeitpunkt t1. Die Zeitabschnitte T3, T4 und T5 beginnen zu Zeitpunkten t2, t3 bzw. t4. Während der Zeitabschnitte T1, T3 und T5 arbeitet die Vorrichtung 10 zum Anhalten des Rolltores 12 in ihrer Normalbetriebsart, in der keine Kraft F auf die Schaltleiste 16 wirkt und in der auch der durch die Schaltleiste 16 gebildete Stromkreis geschlossen ist. In der Normalbetriebsart moduliert der Modulator 44 das Auswertesignal AS.

Im Zeitabschnitt T2 ist der Stromkreis durch die Schaltleiste 16 unterbrochen, weil beispielsweise eine Anschlußleitung der Schaltleiste 16 durch Witterungseinflüsse unterbrochen worden ist. Die Unterbrechung führt, wie unten an Hand der Figur 5 erläutert, zu einem Ausbleiben der Modulation. Das Ausbleiben der Modulation des Auswertesignals AS wird in der Auswerteschaltung 46 erkannt. Daraufhin wird das Rolltor 12 angehalten, falls es sich in Bewegung befindet. Ein Betätigen des Rolltores 12 ist nicht möglich, wenn die Modulation des Auswertesignals AS fehlt.

Im Zeitabschnitt T4 betätigt die durch ein Hindernis entstehende Kraft F die ordnungsgemäß angeschlossene Schaltleiste 16. Wie unten an Hand der Figur 5 erläutert, führt dieses Betätigen ebenfalls zu einem Ausbleiben der Modulation. In der Auswerteschaltung 46 wird das Ausbleiben der Modulation des Auswertesignals AS erkannt und die Bewegung des Rolltores 12 vor dem Hindernis gestoppt. Ein Betätigen des Rolltores 12 ist erst wieder möglich, wenn die Kraft F nicht mehr auf die Schaltleiste 16 wirkt, d.h. das Hindernis aus der Torausfahrt entfernt worden ist.

Figur 5 zeigt Signalverläufe im Modulator 44, so daß beim Erläutern der Figur 5 auch auf die Figur 2 Bezug genommen wird. In Figur 5 sind fünf Koordinatensysteme mit einer gemeinsamen Ordinatenachse 120 dargestellt, auf der jeweils Spannungswerte U abgetragen sind. Auf den Abszissenachsen der Koordinatensysteme ist die Zeit t abgetragen. Die Zeitpunkte t0 bis t4 bezeichnen wieder die Grenzen zwischen den Zeitabschnitten T1 bis T5. Linien 122 verdeutlichen die Grenzen zwischen den Zeitabschnitten T1 bis T5.

Im obersten Koordinatensystem der Figur 5 ist die Sägezahnspannung US dargestellt. Der Mittelwert der Sägezahnspannung US liegt bei der halben Versorgungsspannung Uc. Die Sägezahnspannung US schwankt zwischen einem unteren Spannungswert bei etwa einem Drittel der Versorgungsspannung Uc und einem oberen Spannungswert bei etwa zwei Dritteln der Versorgungsspannung Uc. Die Sägezahnspannung US hat in allen Zeitabschnitten T1 bis T5 den gleichen Signalverlauf.

Unterhalb des Koordinatensystems für die Sägezahnspannung US ist in einem zweiten Koordinatensystem die Spannung U1 an der Schaltleiste 16 dargestellt. Eine waagerechte Linie 124 verdeutlicht den Wert der Referenzspannung Vref, der im Ausführungsbeispiel bei der halben Versorgungsspannung Uc liegt. Eine waagerechte Linie 126 verdeutlicht einen Spannungswert, der einem Drittel der Versorgungsspannung Uc entspricht. Eine waagerechte Linie 128 verdeutlicht schließlich einen Spannungswert, der zwei Dritteln der Versorgungsspannung Uc entspricht.

In den Zeitabschnitten T1 , T3 und T5 stimmt die Spannung U1 mit der Referenzspannung Vref überein, die den Sollwert für die Spannung U1 in der Normalbetriebsart vorgibt. Der Operationsverstärker 58 vergleicht, wie bereits erwähnt, den Spannungswert U1 mit den sich ständig ändernden Spannungswerten der Sägezahnspannung US. Solange der Spannungswert U1 in den Zeitabschnitten T1, T3 und T5 innerhalb des Spannungsbereiches liegt, in welchem sich die Spannungswerte der Sägezahnspannung US bewegen, wird am Ausgang des Operationsverstärkers 58 ein rechteckförmiges Signal erzeugt, das im mittleren Koordinatensystem der Figur 5 als Spannungsverlauf U2 dargestellt ist. In den Zeilenabschnitten T1, T3 und T5 ist die Spannung U1 gleich 1/2 Uc, so daß die Impulsdauer des rechteckförmigen Signals der Spannung U2 gleich der Zeit für die Pulspause ist.

Im Zeitabschnitt T2 hat die Spannung U1 dagegen einen Wert, der oberhalb der Spannung liegt, die zwei Dritteln der Versorgungsspannung Uc entspricht. Dadurch ist die Spannung am positiven Eingang des Operationsverstärkers 58 dauerhaft größer als die Spannungswerte der Sägezahnspannung US am negativen Eingang des Operationsverstärkers 58. Die Folge ist, daß der Ausgang des Operationsverstärkers 58 und damit auch die Spannung U2 dauerhaft auf einem hohen Spannungswert, von beispielsweise plus zwölf Volt liegt.

Im Zeitabschnitt T4 wird der Spannungswert U1 durch das Drücken der Schaltleiste 16 unter einen Spannungswert gezogen, der einem Drittel der Versorgungsspannung Uc entspricht. Der Spannungswert am positiven Eingang des Operationsverstärkers 58 ist dauerhaft kleiner als die Spannungswerte der Sägezahnspannung am negativen Eingang des Operationsverstärkers 58. Deshalb wird am Ausgang des Operationsverstärkers 58 der Spannungswert 0 Volt ausgegeben, bis zum Zeitpunkt t4 die Schaltleiste 16 wieder losgelassen wird.

Die Wirkung des Flipflops 62 auf den Spannungsverlauf U2 ist in einem Koordinatensystem für die Spannung U3 dargestellt. Das Flipflop 62 teilt die Taktfrequenz der rechteckförmigen Spannung U2 im Falle der Modulation, d.h. in den Zeitabschnitten T1, T3 und T5. In den Zeitabschnitten T2 und T4 wird der durch die Spannung U2 vorgegebene Signalverlauf im wesentlichen beibehalten.

Im untersten Koordinatensystem der Figur 5 ist die Spannung U4 am Ausgang des Flipflops 64 dargestellt. Das Flipflop 64 ist so beschaltet, daß die Schaltfrequenz an seinem Eingang auch am Ausgang beibehalten wird. Durch die äußere Beschaltung des Flipflops 64 wird jedoch erreicht, daß ein dauerhafter positiver Spannungswert der Spannung U4 unterdrückt wird. Demzufolge hat die Spannung U4 in den Zeitabschnitte T1, T3 und T5 einen rechteckförmigen Signalver lauf. In den Zeitabschnitten T2 und T4 hat die Spannung U4 dagegen den Spannungswert 0 Volt. Deshalb wird das Modulatorelement 52 in den Zeitabschnitten T2 und T4 nicht angesteuert, so daß auch die Modulation des Sekundärsignals SS, des gleichgerichteten Sekundärsignals GS sowie des Auswertesignals AS unterbleibt.

Figur 6 zeigt Signalverläufe in der Auswerteschaltung 46, so daß beim Erläutern der Figur 6 auch auf die Figur 3 Bezug genommen wird. In Figur 6 sind sechs Koordinatensysteme mit einer gemeinsamen Ordinatenachse 140 dargestellt, auf der Spannungswerte U abgetragen sind. Die Koordinatensysteme haben jeweils eine Abszissenachse, auf der die Zeit t abgetragen ist. Linien 142 verdeutlichen die Grenzen zwischen den Zeitabschnitten T1 bis T5.

Im oberen Koordinatensystem der Figur 6 ist der bereits in Figur 4 gezeigte Verlauf des Auswertesignals AS der Vollständigkeit halber nochmals dargestellt.

Im darunterliegenden Koordinatensystem ist die Spannung U5 dargestellt, die mit Hilfe der Klemmschaltung am Pluspol des Komparators 100 erzeugt wird. Die Klemmschaltung bewirkt mittels eines Koppelkondensators, eines Ableitwiderstands und einer Diode, welche auch die Substratdiode des Komparators sein kann, daß die Spannung U5 im Vergleich zu den Spannungswerten des Auswertesignals AS angehoben wird. Die Spannung U5 wird so weit angehoben, daß auch bei einem geringen Modulationsgrad die untere Hüllkurve der Spannung U5 negative Spannungsspitzen 144 enthält, zwischen denen Bereiche mit positiven unteren Amplitudenwerten liegen.

Das mittlere Koordinatensystem in Figur 6 zeigt die Spannung U6 am Ausgang des Komparators 100. Wie bereits erwähnt, ist der negative Eingang des Komparators 100 mit der Masseleitung M verbunden. Deshalb bewirken die Spannungsspitzen 144 ein Abfallen der Spannung am Ausgang des Komparators 100 vom Spannungswert plus 12 Volt auf den Spannungswert 0 Volt. Fallende Signalflanken treten im Spannungsverlauf der Spannung U6 immer dann auf, wenn die Spannung U5 vom positiven Spannungsbereich zum negativen Spannungsbereich übergeht, wie es bei den Spannungsspitzen 144 der Fall ist.

Unter dem Koordinatensystem für die Spannung U6 ist ein Koordinatensystem für die Spannung U7 am Ausgang des dem Komparator 100 nachgeschalteten Monoflops 102 dargestellt. Das Monoflop 102 schaltet mit einer fallenden Flanke an seinem Eingang für eine Zeit, die etwa der Periodendauer des Trägersignals entspricht, d.h. bei einer Trägerfrequenz von 10 kHz ergibt sich eine Periodendauer von 100 µs. Rechteckimpulse 146 entstehen deshalb aus mehreren unmittelbar aufeinanderfolgenden Schaltvorgängen des Monoflops 102 dort, wo die Spannungsspitzen 144 auftreten. Der Ausgang des Monoflops 102 ist in den Zeitabschnitten T2 und T4 aufgrund der dort auftretenden breiten Spannungsspitze 144 dauerhaft auf einem hohen positiven Spannungswert, vgl. Bezugszeichen 148 und 150.

Im untersten Koordinatensystem der Figur 6 ist die Spannung U8 am invertierenden Ausgang des dem Monoflop 102 nachgeschalteten Monoflops 104 dargestellt. Das Monoflop 104 schaltet ebenfalls mit fallenden Signalflanken. Die Schaltzeit des Monoflops 104 stimmt etwa mit der Periodendauer von 1 ms des Modulationssignals überein, d.h. eines Signals mit einer Frequenz von 1 kHz, überein. In der Normalbetriebsart werden deshalb die Lücken zwischen den Rechteckimpulsen 146 aufgrund unmittelbar aufeinanderfolgender Schaltvorgänge des Monoflops 104 geschlossen. Am nichtinvertierenden Ausgang liegt deshalb in den Zeitabschnitten T1, T3 und T5 ein hoher positiver Spannungswert an, beispielsweise plus 12 Volt. Am invertierenden Ausgang liegt aufgrund der Invertierung in den Zeitabschnitten T1, T3 und T5 der Spannungswert 0 Volt an. Dieser Spannungswert bewirkt aufgrund der in Figur 3 gezeigten Beschaltung des Relais 108, daß das Relais 108 eingeschaltet und der Arbeitskontakt 110 geschlossen wird. Das Rolltor 12 kann somit betätigt werden.

In den Zeitabschnitten T2 und T4 treten am Eingang des Monoflops 104 keine fallenden Signalflanken auf. Deshalb liegt am nichtinvertierenden Ausgang des Monoflops 104 in den Zeitabschnitten T2 und T4 der Spannungswert 0 Volt an. Am invertierenden Ausgang des Monoflops 104 liegt dagegen ein positiver Spannungswert von plus 12 Volt an. Das Relais 108 wird deshalb in den Zeitabschnitten T2 und T4 ausgeschaltet. Der Arbeitskontakt 110 ist geöffnet, so daß das Rolltor 12 nicht betätigt werden kann.

Figur 7 zeigt ein Blockschaltbild einer Vorrichtung 10' zum Betätigen eines in Draufsicht dargestellten Rolltores 12'. Die Figur 7 stimmt im wesentlichen mit der Figur 1 überein, so daß Baugruppen mit gleicher Funktion nicht noch einmal erläutert werden. Diese Baugruppen erhalten jedoch zur Unterscheidung einen hochgestellten Strich. An den Längsseiten des Rolltores 12' ist jeweils eine Schaltleiste 16' bzw. 16" befestigt. Die Schaltleisten 16' und 16" sind im wesentlichen wie die Schaltleiste 16 aufgebaut. Die Schaltleiste 16" ist wie auch die Schaltleiste 16' am Modulator 44' angeschlossen, vgl. Anschlüsse 21a', 21b' sowie 21a" und 21b".

Bewegt sich das Rolltor 12' nach rechts so übt ein in der Ausfahrt stehendes Hindernis eine Kraft F' aus, welche die Schaltleiste 16' drückt. Wird das Rolltor 12' dagegen nach rechts hin geöffnet, so wird durch ein im Weg stehendes Hindernis eine Kraft F" ausübt, welche die Schaltleiste 16" betätigt.

Der Signalgenerator 38' ist wie der Signalgenerator 38 aufgebaut, vgl. Figur 1. Der Aufbau des Modulators 44' wird unten an Hand der Figur 8 näher erläutert.

Die Auswerteschaltung 46' hat neben dem Ausgang A1' noch einen weiteren Ausgang A2. Der Ausgang A1' dient zum Betätigen der nicht dargestellten Antriebsvorrichtung des Rolltores 12' abhängig vom Schaltzustand der Schaltleiste 16'. Der Ausgang A2 dient dagegen zum Betätigen der Antriebsvorrichtung des Rolltores 12' abhängig vom Schaltzustand der Schaltleiste 16".

Die getrennte Auswertung der Schaltzustände der Schaltleisten 16' und 16" wird durch das Verwenden zweier Modulationsfrequenzen von 800 Hz und 1 kHz ermöglicht. Ist die Schaltleiste 16' in ihrer Normalbetriebsart, so wird das Auswertesignal AS' unabhängig vom Zustand der Schaltleiste 16" mit einer Frequenz von 1 kHz moduliert. Befindet sich die Schaltleiste 16" in ihrer Normalbetriebsart, so wird das Auswertesignal AS' unabhängig vom Zustand der Schaltleiste 16' mit einer Frequenz von 800 Hz moduliert. Das Auswertesignal AS' hat demzufolge folgende Modulationszustände:
- keine Modulation,
- Modulation mit 1 kHz,
- Modulation mit 800 Hz, oder
- Modulation mit einer Überlagerung der Modulationsfrequenzen 1 kHz und 800 Hz.

Die Auswerteschaltung 46' erfaßt den jeweiligen Modulationszustand des Auswertesignals AS' und betätigt die Antriebsvorrichtung des Rolltores 12' so, daß ein sicherer Betrieb des Rolltores 12' gewährleistet wird. Der Aufbau der Auswerteschaltung 46' wird unten an Hand der Figur 9 noch näher erläutert.

Figur 8 zeigt ein Blockschaltbild des Modulators 44'. Baugruppen im Modulator 44' mit der gleichen Funktion wie im Modulator 44 gemäß Figur 3 haben in Figur 2 dasselbe Bezugszeichen, jedoch mit einem hochgestellten Strich und im Fall der doppelten Ausführung mit zwei hochgestellten Strichen. Der Modulator 44' enthält für beide Schaltleisten 16', 16" gemeinsam einen Gleichrichter 51', ein Modulatorelement 52' und einen Stabilisierungsschaltung 54'.

Ein zur Schaltleiste 16' gehörender Multivibrator 56' erzeugt eine Sägezahnspannung US' mit einer Frequenz von 2 kHz. Zum Erzeugen des Modulationssignals für die Schaltleiste 16' werden ein Operationsverstärker 58' und ein Flipflop 62' verwendet, die wie oben an Hand des Operationsverstärkers 58 und des Flipflops 62 erläutert arbeiten. Ein weiterer Multivibrator 56" erzeugt eine Sägezahnspannung US" mit einer Frequenz von 1,6 kHz, die in einem Operationsverstärker 58" mit einer Spannung U1" am Anschluß 21a" der Schaltleiste 16" verglichen wird. Der Ausgang des Operationsverstärkers 58" ist mit dem Eingang eines Flipflops 62" verbunden. Somit gibt es für die Schaltleisten 16' und 16" jeweils einen Multivibrator 56' bzw. 56", einen Operationsverstärker 58' bzw. 58" und ein Flipflop 62' bzw. 62".

Am Ausgang des Flipflops 62' entsteht eine erste Modulationsspannung U3' für einen zur Schaltleiste 16' gehörenden ersten Kanal. Am Ausgang des Flipflops 62" entsteht eine weitere Modulationsspannung U3' für einen zur Schaltleiste 16" gehörenden zweiten Kanal. Beim Modulator 44' handelt es sich somit im Gegensatz zu dem einkanaligen Modulator 44 um einen Modulator mit zwei Modulationskanälen.

Die beiden Spannungen U3' und U3" werden an die Eingänge eines NOR-Gatters 160 geführt, welches die Spannungswerte an seinen Eingängen gemäß einer NICHT-ODER-Funktion verknüpft. Am Ausgang des Gatters 160 hat eine Spannung V10 nur dann einen positiven Wert, wenn an beiden Eingängen des Gatters 160 eine Spannung 0 Volt anliegt. Die Spannung U10 wirkt direkt auf das Modulatorelement 52'. Bei hohem positivem Spannungswert schaltet das Modulatorelement 52' rückwirkend über den Gleichrichter 51' die Wicklung 42' kurz, um das Sekundärsignal SS' und damit auch das Auswertesignal AS' zu modulieren, vgl. auch Figur 7.

Die Spannungen U2' und U2" liegen weiterhin an den Eingängen einer Sperrschaltung 162 an, die bewirkt, daß das Modulatorelement 52' nicht länger als eine vorgegebene Zeit angesteuert wird, beispielsweise die Zeit für eine halbe Taktperiode des 800-kHz-Modulationstaktes. Eine weitere Sperrschaltung 164 gewährleistet, daß das Modulatorelement 52' auch beim Einschaltvorgang richtig arbeitet.

Figur 9 zeigt ein Blockschaltbild der Auswerteschaltung 46'. Das Auswertesignal AS' wird in der Auswerteschaltung 46' an den Eingang einer Demodulatorschaltung 170 angelegt. Am Ausgang der Demodulatorschaltung 170 liegt eine Spannung U11 an, deren Verlauf unten an Hand der Figur 11 noch näher erläutert wird. Die Demodulatorschaltung 170 enthält einen Gleichrichter.

Der Demodulatorschaltung 170 ist eine Filterschaltung 172 nachgeschaltet. Am Ausgang der Filterschaltung 172 liegt eine Spannung U12 an, deren Spannungsverlauf im wesentlichen dem Modulationsverlauf im Auswertesignal AS' folgt.

Mit einem Ton-Decoder 174 wird ein Ton mit einer Frequenz von 1 kHz im Spannungsverlauf U12 erfaßt. Wird ein Ton mit einer Frequenz von 1 kHz durch den Ton-Decoder 174 erfaßt, wird am Ausgang A1' der Spannungswert 0 Volt erzeugt. Das Relais 108' zieht an und schließt den Arbeitskontakt 110'. Damit wird die Normalbetriebsart der Schaltleiste 16' erfaßt und das Rolltor 12' kann betätigt werden. Wird der Ton mit einer Frequenz von 1 kHz im Auswertesignal AS' nicht mit dem Ton-Decoder 174 erfaßt, so liegt am Ausgang A1' eine Spannung von plus 12 Volt an. Das Relais 108' fällt ab und öffnet den Arbeitskontakt 110'. Das Rolltor 12' kann nicht betätigt werden, wenn entweder die Schaltleiste 16' gedrückt ist oder wenn der Stromkreis durch die Schaltleiste 16' unterbrochen ist.

Die Spannung U12 liegt auch am Eingang eines Ton-Decoders 176 an, der einen Ton von 800 Hz erfaßt. Liegt ein solcher Ton im Auswertesignal AS' und damit auch im Spannungsverlauf der Spannung U12 vor, so hat der Ausgang des Ton-Decoders 176 einen Spannungswert von 0 Volt. Damit zieht das Relais 108" an und schließt den Arbeitskontakt 110". Das Rolltor 12' kann wiederum betätigt werden. Fehlt dagegen ein 800Hz-Ton, so liegt am Ausgang des Ton-Decoders 176 eine Spannung von plus 12 Volt an. Das Relais 108" öffnet den Arbeitskontakt 110". Das Rolltor 12' kann nicht betätigt werden, wenn entweder ein Hindernis auf die Schaltleiste 16" drückt, oder der Stromkreis durch diese Schaltleiste 16" unterbrochen ist.

Beide Arbeitskontakte 110' und 110" sind geschlossen, wenn die Schaltleiste 16' und die Schaltleiste 16" in ihrer Normalbetriebsart sind. Wird das Auswertesignal AS' gar nicht moduliert, so sind beide Arbeitskontakte 110' und 110" geöffnet. Dies ist beispielsweise der Fall, wenn der Übertrager Ü', vgl. Figur 7, oder der Modulator 44' nicht ordnungsgemäß arbeitet.

Die Auswerteschaltung 46' enthält außerdem eine Fehlererkennung 180. Eine an die Fehlererkennung angeschlossene Leuchtdiode 182 leuchtet nur dann nicht, wenn die Auswerteschaltung 46' ein moduliertes Auswertesignal AS' erfaßt. Die Fehlererkennung 180 ist ähnlich wie die an Hand der Figur 3 erläuterte Auswerteschaltung 46 aufgebaut.

Figur 10 zeigt Signalverläufe im Modulator 44', so daß beim Erläutern der Figur 10 auf die Figur 8 Bezug genommen wird. In Figur 10 sind vier Koordinatensysteme mit einer gemeinsamen Ordinatenachse 188 dargestellt, auf der Spannungswerte U abgetragen sind. Auf den Abszissenachsen der Koordinatensysteme ist jeweils die Zeit t abgetragen. In Zeitabschnitten T10, T12 und T14 sind beide Schaltleisten 16' und 16" in ihrer Normalbetriebsart. Während eines Zeitabschnitts T11 wird die Schaltleiste 16' gedrückt und die Schaltleiste 16" ist in ihrer Normalbetriebsart. In einem Zeitabschnitt T13 wird dagegen nur die Schaltleiste 16" gedrückt und die Schaltleiste 16' ist in ihrer Normalbetriebsart.

Das oberste Koordinatensystem in Figur 10 zeigt den Spannungsverlauf der Spannung U3' am Ausgang des Flipflops 62'. In der Normalbetriebsart der Schaltleiste 16' im Zeitabschnitt T10 werden Rechteckimpulse 190 erzeugt. Wird die Schaltleiste 16' im Zeitabschnitt T11 gedrückt oder ist der Schaltkreis durch die Schaltleiste 16' unterbrochen, so bleibt die Spannung U3' dauerhaft auf dem Spannungswert 0 Volt, vgl. Impulslücke 192. Wird die Schaltleiste 16' wieder losgelassen, so hat die Spannung U3' erneut einen rechteckförmigen Signalverlauf, vgl. Rechteckimpulse 194. Die Rechteckimpulse 190 und 194 haben eine Impulsfrequenz von 1 kHz.

Direkt unter dem Koordinatensystem für die Spannung U3' ist ein Koordinatensystem für die Spannung U3" dargestellt. Ist die Schaltleiste 16" in den Zeitabschnitten T10, T11 und T12 ihrer Normalbetriebsart, so hat die Spannung U3" einen rechteckförmigen Verlauf mit Rechteckimpulsen 200, die eine Impulsfrequenz von 800 Hz haben. Wird die Schaltleiste 16" gedrückt, so bleibt die Spannung U3" so lange auf dem Spannungswert 0 Volt, bis die Schaltleiste 16" im Zeitabschnitt T14 wieder losgelassen wird. Im Zeitabschnitt T13 entsteht eine Impulslücke 202, bis die Spannung U3" im Zeitabschnitt T14 wieder einen rechteckförmigen Signalverlauf hat, vgl. Rechteckimpulse 204.

Unter dem Koordinatensystem für die Spannung U3" ist ein Koordinatensystem für die Spannung U10 dargestellt, deren Signalverlauf eine NICHT-ODER-Verknüpfung der Signalverläufe für die Spannungen U3' und U3" ist. Die Spannung U10 hat nur dann einen hohen positiven Wert, wenn beide Spannungen U3' und U3" den Spannungswert 0 Volt haben. Der in Figur 10 gezeigte Verlauf der Spannung U10 stellt einen möglichen Verlauf dar, gehört aber nicht zu den Spannungsverläufen der Spannungen U3' und U3". Die Spannung U10 hat einen rechteckförmigen Signalverlauf mit Rechteckimpulsen 210, die unterschiedliche Impulsbreiten haben. In diesem Zusammenhang wird auch von einem rechteckförmigem Verlauf mit zufälliger Impulsbreite gesprochen. Die Impulsbreite wird jedoch nicht größer als die Impulsbreite der Rechteckimpulse 200 bzw. 204. Mit der Spannung U10 wird das Modulatorelement 52' angesteuert, so daß das Sekundärsignal SS' moduliert wird. Der Modulationsgrad auf der Seite des Modulators 44' beträgt fast 100 %.

Im untersten Koordinatensystem der Figur 10 ist der Verlauf des Auswertesignals AS' dargestellt. Der Modulationsgrad des Auswertesignals AS' beträgt aufgrund der Dämpfung des Übertragers Ü' nur noch etwa 40 %. Das Auswertesignal AS' wurde in Figur 10 der Vollständigkeit halber dargestellt. Es tritt nicht im Modulator 44' sondern an der Auswerteeinheit 46' auf. In den Zeitabschnitten T10, T12 und T14, in denen beide Schaltleisten 16' und 16" in ihrer Normalbetriebsart sind, wird das Auswertesignal AS' mit 1 kHz und mit 800 Hz moduliert. Während des Zeitabschnitts T11, in welchem nur die Schaltleiste 16' gedrückt ist, wird das Auswertesignal AS' nur mit der Frequenz 800 Hz moduliert. Im Zeitabschnitt T13, in dem nur die Schaltleiste 16" gedrückt ist, wird das Auswertesignal AS' dagegen nur mit der Frequenz von 1 kHz moduliert.

Figur 11 zeigt Signalverläufe in der Auswerteeinheit 46', so daß beim Erläutern der Figur 11 auch auf die Figur 9 Bezug genommen wird. In Figur 11 sind drei Koordinatensysteme dargestellt, die eine gemeinsame Ordinatenachse 220 haben. Auf der Ordinatenachse 220 sind Spannungswerte U abgetragen. Die Koordinatensysteme in Figur 11 haben jeweils eine eigene Abszissenachse, auf der die Zeit t abgetragen ist.

Im obersten Koordinatensystem der Figur 11 ist zum Vergleich das bereits in Figur 10 gezeigte Auswertesignal AS' dargestellt.

Im mittleren Koordinatensystem der Figur 11 ist der Signalverlauf der Spannung U11 am Ausgang der Demodulatorschaltung 170 dargestellt. Nur positive Spannungswerte des Auswertesignals AS' können den Demodulator 170 passieren und erscheinen als Ausgangsspannung U11.

Im unteren Koordinatensystem der Figur 11 ist der Verlauf der Spannung U12 dargestellt. Durch den Filter 172 wurde der hochfrequente Anteil von 10 kHz aus dem Spannungsverlauf U11 herausgefiltert. Der Verlauf der Spannung U12 folgt im wesentlichen der Einhüllenden des Spannungsverlaufs U11. In den Zeitabschnitten T10, T12 und T14 erfassen beide Ton-Decoder 174 und 176 ihre jeweilige Eichfrequenz von 1 kHz bzw. 800 Hz. Im Zeitabschnitt T11 erfaßt nur der Ton-Decoder 176 seine Eichfrequenz von 800 Hz. Und im Zeitabschnitt T13 erfaßt nur der Ton-Decoder 174 seine Eichfrequenz von 1 kHz.

Die Ton-Decoder 174 und 176 sind Synchronisierschaltungen, die sich auf ihre Eichfrequenzen synchronisieren wollen. Sobald eine hinreichend stabile Synchronisation vorliegt, wird das Ausgangssignal der Ton-Decoder 174 bzw. 176 umgeschaltet. In den Ton-Decodern 174 und 176 sind sogenannte Phasenregelschaltungen enthalten, englisch als "phase locked loop" bezeichnet.

Figur 12 zeigt ein Blockschaltbild einer Vorrichtung 10a zum Anhalten eines Rolltores 12a. Die Vorrichtung 10a unterscheidet sich von der oben an Hand der Figur 7 erläuterten Vorrichtung 10' dadurch, daß nicht einen Modulator 44' sondern zwei Modulatoren 44a und 44b verwendet werden. An den Längsseiten des Rolltores 12a ist jeweils eine Schaltleiste 16a bzw. 16b befestigt. Die Schaltleiste 16a bzw. 16b ist wie die Schaltleiste 16' bzw. 16" aufgebaut. Die Schaltleiste 16a ist mit dem Modulator 44a verbunden, der das Primärsignal PS mit einer Frequenz von 1 kHz moduliert. Dazu ist der Modulator 44a mit Hilfe einer Ringspule 30a mit einem Signalgenerator 38a gekoppelt, der das Primärsignal PS erzeugt. Der Signalgenerator 38a erzeugt im Vergleich zum Signalgenerator 38' ein Primärsignal PSa höherer Leistung, weil er eine Gegentakt-Endstufe enthält. Die Ausgänge des Signalgenerators 38a sind unter Zwischenschaltung von Anpassungswiderständen 36a und 36b mit einer Ringspule 28a verbunden. Die Ringspulen 28a, 30a sowie eine weitere Ringspule 30b umfassen ein Stahlseil 24a, das in Längsrichtung des metallenen Rolltores 12a gespannt ist, so daß ein Übertrager Üa gebildet wird, der in seiner Funktion dem an Hand der Figur 7 erläuterten Übertrager Ü' entspricht.

Eine Auswerteschaltung 46a entspricht in ihrer Funktion der Auswerteschaltung 46', vgl. Figur 7. Jedoch hat die Auswerteschaltung 46a zwei Eingänge, die jeweils mit dem zur Ringspule 28a führenden Ende des Anpassungswiderstandes 36a bzw. 36b verbunden sind. Der Aufbau und die Funktion der Auswerteschaltung 46a wird unten an Hand der Figur 14 näher erläutert.

Die Schaltleiste 16b ist mit dem Modulator 44b verbunden. Der Modulator 44b moduliert das Primärsignal PSa mit einer Frequenz von 800 Hz. Der Modulator 44b ist dazu mit der Ringspule 30b verbunden.

Die in Figur 12 gezeigte Anordnung ermöglicht es, kurze Anschlußleitungen 250, 252 zum Anschluß der Schaltleiste 16a an den Modulator 44a zu verwenden. Ebenso werden kurze Anschlußleitungen 254 und 256 zum Anschluß der Schaltleiste 16b an den Modulator 44b verwendet. Während bei dem an Hand der Figuren 7 bis 11 erläuterten Ausführungsbeispiel die Anschlußleitungen zumindest einer Schaltleiste 16' bzw. 16" mühsam durch den Torholm des Rolltores 12, 12' verlegt werden müssen, können die Anschlußleitungen 252 bis 254 beim Ausführungsbeispiel gemäß Fig. 12 auf einfache Art mit dem Modulator 44a bzw. 44b verbunden werden.

Figur 13 zeigt ein Blockschaltbild der Modulatoreinheit 44a. In Figur 13 gezeigte Funktionselemente, die im wesentlichen wie bereits an Hand der Figur 2 erläuterte Funktionselemente aufgebaut sind, haben in Figur 13 das gleiche Bezugszeichen, jedoch mit dem nachgestellten Kleinbuchstaben a. Signale SSa, GSa, U1a, USa, U2a, U3a und U4a haben den gleichen Verlauf wie die entsprechenden Signale SS, GS, U1, US, U2, U3 bzw. U4. Deshalb wird auf die an Hand der Figuren 4, 5 und 6 erläuterten Verläufe dieser Signale verwiesen.

Der Modulator 44a enthält außerdem einen monostabilen Multivibrator 300, dessen Eingang mit dem Ausgang des Flipflops 64a verbunden ist, so daß am Eingang die Spannung U4a anliegt. Der Ausgang des Multivibrators 300 ist über einen Lastwiderstand RL mit dem Ausgang des Gleichrichters 51a verbunden. Der Multivibrator 300 ist retriggerbar. Der Lastwiderstand RL wird bei fehlenden Spannungsimpulsen der Spannung U4a gegen Masse wirksam geschaltet, d.h. zum Beispiel in den Zeitabschnitten T2 und T4 gemäß Figur 5.

Das Betätigen der Schaltleiste 16a hat zur Folge, daß das Modulatorelement 52a ausgeschaltet wird, vgl. Erläuterungen zu Figur 2. Ist das Modulatorelement 52a im AUS-Zustand, so bedeutet dies, daß der über die Ringspule 30a in den Übertrager Üa transformierte Gesamtwiderstand des Modulators 44a hochohmiger wird. Damit wird auch die Leiterschleife 26a hochohmiger. Die Folge ist, daß der andere Modulator 44b eine geringere Versorgungsspannung erhält und somit die sichere Funktion nicht mehr gewährleistet sein würde. Um diese zu verhindern, wird der Lastwiderstand RL immer dann zugeschaltet, wenn das Modulatorelement 52a im AUS-Zustand ist. Der Lastwiderstand RL erzeugt den gleichen Leistungsverbrauch wie vorher das Modulatorelement 52a im eingeschalteten Zustand. Somit wird einem Fehlbetrieb des Modulators 44b vorgebeugt.

Der Modulator 44b ist im wesentlichen wie der Modulator 44a aufgebaut, arbeitet jedoch mit einer Modulationsfrequenz von 800 Hz. Beide Modulatoren 44a und 44b haben den gleichen Leistungsverbrauch. Dies hat zur Folge, daß ihre Versorgungsspannungen Uc und damit auch die modulierten Signale die gleichen Amplituden haben. Beim Demodulieren in der Auswerteschaltung 46a haben dann die demodulierten Signale gleiche Amplituden. Dies erleichtert die Auswertung dieser Signale erheblich.

Figur 14 zeigt ein Blockschaltbild der Auswerteschaltung 46a. In Figur 14 gezeigte Funktionselemente, die im wesentlichen wie bereits an Hand der Figur 9 erläuterte Funktionselemente aufgebaut sind, haben in Figur 14 das gleiche Bezugszeichen, jedoch ohne hochgestellten Strich und mit nachgestelltem Kleinbuchstaben a. Der Signalgenerator 38a hat, wie oben bereits erwähnt, eine Gegentakt-Endstufe, so daß im Unterschied zum Signalgenerator 38' zwei Ausgangsleitungen verwendet werden, die jeweils mit dem Anpassungswiderstand 36a bzw. 36b verbunden sind. Ein Auswertesignal ASa entspricht im wesentlichen dem an Hand der Figur 9 erläuterten Auswertesignal AS'. Das Auswertesignal ASa hat jedoch einen etwas anderen Verlauf, weil zwei einzelne Modulatoren 44a und 44b anstelle des Modulators 44' verwendet werden. Während im Modulator 44' die Modulationssignale unterschiedlicher Modulationsfrequenz mit Hilfe des NOR-Gatters 160 überlagert wurden, werden beim Ausführungsbeispiel gemäß der Figuren 12 bis 14 die Modulationssignale im Übertrager Üa überlagert.

Die Auswerteschaltung 46a enthält dem Demodulator 170a nachgeschaltet eine Filterschaltung 172a, die außerdem einen Regelverstärker enthält. Am Ausgang der Filterschaltung 172a wird eine Spannung U12a erzeugt, die etwa den Verlauf der Spannung U12 hat, vgl. Figur 11. Ein Digitalfilter 310 ist eingangsseitig mit dem Ausgang der Filterschaltung 172a verbunden. Das Digitalfilter 310 erzeugt ein vorgegebenes Ausgangssignal, wenn der Spannungsverlauf U12a eine Modulationsfrequenz von 1 kHz enthält. Am Ausgang des Digitalfilters 310 ist ein Komparator 312 angeschlossen, der das Relais 108a abhängig vom Ausgangssignal des Digitalfilters 310 betätigt. Letztlich wird das Relais 108a so geschaltet, wie das an Hand der Figur 9 erläuterte Relais 108'.

Der Eingang eines Digitalfilters 320 ist ebenfalls mit dem Ausgang der Filterschaltung 172a verbunden. Das Digitalfilter 320 erzeugt an seinem Ausgang ein vorgegebenes Ausgangssignal, wenn an seinem Eingang eine Frequenz oder ein Frequenzanteil von 800 Hz anliegt. Am Ausgang des Digitalfilters 320 ist ein Komparator 322 angeschlossen, der abhängig vom Ausgangssignal des Digitalfilters 320 das Relais 108b schaltet. Letztlich wird das Relais 108b so geschaltet, wie es oben an Hand der Figur 9 für das Relais 108" erläutert worden ist. Die Frequenzen der Modulatoren 44a und 44b werden so gewählt, daß die Digitalfilter 310, 320 sicher filtern. Somit werden auch andere Frequenzen als 1 kHz und 800 Hz verwendet.

Anstelle der Ton-Decoder 174 und 176, vgl. Figur 9, werden in der Auswerteschaltung 46a digitale Filterbausteine 310, 320 sowie Komparatoren 312 und 322 verwendet. Der Regelverstärker in der Filterschaltung 172a erzeugt konstante Eingangspegel an den Digitalfiltern 310, 320. Ein Abgleich der Digitalfilter 310, 320 ist nicht notwendig. Der zeitliche Aufwand zum Abgleich der Ton-Decoder 174 und 176 entfällt somit beim Verwenden der Auswerteschaltung 46a.

Figur 15 zeigt einen Modulator 44c, der anstelle des Modulators 44, 44a bzw. 44b verwendet wird. In Figur 15 gezeigte Funktionselemente, die im wesentlichen wie bereits an Hand der Figur 2 erläuterte Funktionselemente aufgebaut sind, haben in Figur 15 das gleiche Bezugszeichen, jedoch mit dem angefügten Kleinbuchstaben c. Anstelle einer Schaltleiste wird in Figur 15 eine Lichtschranke 330 verwendet, die einen Lichtsender 332, z.B. eine Leuchtdiode, und einen Lichtempfänger 334 enthält, z.B. eine Fotodiode. Ein Opto-Sender 336 ist an die Stabilisierungsschaltung 54c angeschlossen und wird mit der Versorgungsspannung Uc versorgt. Der Opto-Sender 336 schaltet den Lichtsender 332 mit einer Frequenz von 1 kHz ein und aus, wobei das Puls-Pausen-Verhältnis entweder 1:1 oder z.B. 1:10 ist. Demzufolge strahlt der Lichtsender 332 einen Lichtstrahl LS mit dieser Frequenz zum Lichtempfänger 334 hin ab. Der Lichtempfänger 334 ist an einen Opto-Empfänger 338 angeschlossen, der ebenfalls durch die Versorgungsspannung Uc versorgt wird. Der Opto-Empfänger 338 verstärkt die vom Lichtempfänger 334 erzeugten Signale und steuert das Modulatorelement 52c mit der Spannung U4c an. Die Spannung U4c hat im wesentlichen den Verlauf der Spannung U4, vgl. Figur 5. Sobald ein Hindernis den Lichtstrahl LS unterbricht, wird vom Lichtempfänger 334 kein moduliertes Lichtsignal mehr empfangen. Die Modulation setzt auf der Seite des Opto-Empfängers 338 aus, so daß auch das Modulatorelement 52c im AUS-Zustand ist. Damit wird das Primärsignal PS nicht mehr moduliert. Erst wenn das Hindernis den Lichtstrahl LS nicht mehr unterbricht, setzt die Modulation wieder ein.

Als Lichtsender 332 wird beispielsweise eine Leuchtdiode verwendet, die im Infrarotbereich arbeitet. Durch das Verwenden der Lichtschranke 330 ist ein berührungsloses Schalten möglich. Außerdem ist der Modulator 44c einfach aufgebaut, da der Operationsverstärker 58 sowie die Flipflops 62 und 64 entfallen, vgl. Figur 2.

Um die Funktionssicherheit eines anderen Modulators, vgl. Figur 12, zu erhöhen, wird in einem weiteren Ausführungsbeispiel ein monostabiler Multivibrator 300' und ein Lastwiderstand RL' verwendet, die den oben an Hand der Figur 13 erläuterten Funktionselementen 300 und RL entsprechen.

Bezugszeichenliste
- 10, 10a: Vorrichtung zum Anhalten eines Rolltores
- 12, 12', 12a: Rolltor
- 14, 14': Doppelpfeil
- 16, 16', 16", 16a,16b: Schaltleiste
- 18, 18', 18": Schaltfläche
- 20, 20', 20": Schaltfläche
- F, F', F": Kraft
- 21a, 21b: Anschluß
- 21a', 21b': Anschluß
- 21a", 21b": Anschluß
- 22, 22': Torkörper
- 24, 24': Stahlseil
- 26, 26': Leiterschleife
- 28, 30: Ringspule
- 28', 30': Ringspule
- 32, 32': Kern
- 34, 34': Wicklung
- M, M': Masseleitung
- 36, 36', 36a, 36b: Anpassungswiderstand
- 38, 38', 38a: Signalgenerator
- PS, PS', PSa: Primärsignal
- 40, 40': Kern
- 42, 42': Wicklung
- 44, 44', 44a, 44b, 44c: Modulator
- f1: Modulationsfrequenz
- SS, SS', SSa: Sekundärsignal
- AS, AS', ASa: Auswertesignal
- Ü, Ü', Üa: Übertrager
- 46, 46': Auswerteschaltung
- A1, A1': Ausgang
- 50, 50', 50": Lastwiderstand
- 51, 51', 51 a, 51 c: Gleichrichter
- GS, GS', GSa: gleichgerichtetes Sekundärsignal
- 52, 52', 52a: Modulatorelement
- 54, 54', 54a, 54c: Stabilisierungsschaltung
- Uc, Uc': Versorgungsspannung
- 56, 56', 56", 56a: Multivibrator
- US, US', US": Sägezahnspannung
- 58, 58', 58", 58a: Operationsverstärker
- R1, R1', R1", R1a: Widerstand
- Vref, Vref, Vref": Referenzspannung
- U1, U1', U1", U1a: Spannung an Schaltleiste
- 60: Leitung
- U2, U2', U2", U2a: Spannung am Ausgang des Operationsverstärkers
- 62, 62a: Flipflop
- 64, 64a: Flipflop
- U3, U3', U3", U3a: Spannung am Ausgang des Flipflops
- U4,U4a: Spannung
- 100: Komparator
- 102, 104: Monoflop
- 106, 106', 106": Ankerspule
- 108, 108', 108", 108a, 108b: Relais
- 110, 110', 110": Arbeitskontakt
- 112, 112', 112": Arbeitskreis
- t: Zeit
- PS*: vergrößertes Primärsignal
- 113: Ordinatenachse
- 114, 116: Modulationslücke
- T1 bis T5: Zeitabschnitt
- 120: Ordinatenachse
- 122: Linien
- 124 bis 128: waagerechte Linie
- 140: Ordinatenachse
- 142: Linie
- 144: Spannungsspitzen
- 146: Rechteckimpuls
- 148, 150: positiver Spannungswert
- A2: Ausgang
- U10: Spannung
- 160: NOR-Gatter
- 162, 164: Sperrschaltung
- 170, 170a: Demodulatorschaltung
- U11: Spannung am Ausgang der Demodulatorschaltung
- 172, 172a: Filterschaltung
- U12, U12a: Spannung am Ausgang der Filterschaltung
- 174: Ton-Decoder (1 kHz)
- 176: Ton-Decoder (800 Hz)
- 180: Fehlererkennung
- 182: Leuchtdiode
- 190: Rechteckimpuls
- 192: Impulslücke
- 194: Rechteckimpuls
- 200: Rechteckimpuls
- 202: Impulslücke
- 204, 210: Rechteckimpuls
- 220: Ordinatenachse
- T10 bis T14: Zeitabschnitt
- RL, RL': Lastwiderstand
- 300, 300': Multivibrator
- 310,320: Digitalfilter
- 312,322: Komparator
- 330: Lichtschranke
- 332: Lichtsender
- 334: Lichtempfänger
- 336: Opto-Sender
- LS: Lichtstrahl
- 338: Opto-Empfänger

## Patentansprüche

1. Vorrichtung (10, 10') zum Überwachen einer bewegbaren Einrichtung (12, 12'),
mit mindestens einer an der bewegbaren Einrichtung (12, 12') befestigten Sensoreinheit (16, 16', 16") zum Erfassen von Hindernissen im Weg der bewegbaren Einrichtung (12, 12'),
mindestens einer an der bewegbaren Einrichtung (12, 12') befestigten Modulatoreinheit (44, 44'), die bei einem vorgegebenen Sensorsignal der Sensoreinheit (16, 16', 16") ein Trägersignal (PS) moduliert,
einer elektrischen Kopplungsvorrichtung (Ü, Ü') zum elektrischen Koppeln der Modulatoreinheit (44, 44') und einer Auswerteeinheit (46, 46'), die beim Erfassen einer Modulation an ihrem Eingang ein erstes Überwachungssignal zum Überwachen der bewegbaren Einrichtung (12, 12') erzeugt,
und mit einem entweder in der Modulatoreinheit (44, 44') enthaltenen oder an die Kopplungseinrichtung (Ü, Ü') auf der Seite der Auswerteeinheit (46, 46') angeschlossenen Signalgenerator (38) zum Erzeugen des Trägersignals (PS),
wobei die Modulatoreinheit (44, 44') so aufgebaut ist, daß das Trägersignal (PS) bei einem vom vorgegebenen Sensorsignal abweichenden Sensorsignal nicht moduliert wird,
und wobei die Auswerteeinheit (46, 46') beim Erfassen des unmodulierten Trägersignals (PS) ein vom ersten Überwachungssignal abweichendes zweites Überwachungssignal erzeugt.

2. Vorrichtung (10, 10') nach Anspruch 1,
mit einem Koppelanschluß zum Anschließen einer elektrischen Kopplungsvorrichtung (Ü, Ü'), welche die Auswerteeinheit (46, 46') und eine an einer bewegbaren Einrichtung (12, 12') befestigte Modulatoreinheit (44, 44') zum Modulieren eines Trägersignals (PS) elektrisch koppelt, wobei die Modulatoreinheit (44, 44') das Trägersignal (PS) abhängig vom Sensorsignal mindestens einer Sensoreinheit (16, 16', 16") zum Erfassen von Hindemissen im Weg der bewegbaren Einrichtung (12, 12') moduliert,
und mit einer Baugruppe (10 bis 104; 170 bis 176), die beim Erfassen einer Modulation an ihrem Eingang ein erstes Überwachungssignal zum Überwachen der bewegbaren Einrichtung (12, 12') erzeugt,
wobei die Baugruppe (10 bis 104; 170 bis 176) beim Erfassen des unmodulierten Trägersignals ein vom ersten Überwachungssignal abweichendes zweites Überwachungssignal erzeugt.

3. Vorrichtung (10, 10') nach Anspruch 1,
mit einer Befestigungseinrichtung zum Befestigen der Modulatoreinheit an einer bewegbaren Einrichtung (12, 12'),
mindestens einem Sensoranschluß (21a, 21 b) zum Anschließen einer Sensoreinheit (16, 16', 16"), die Hindernisse im Weg der bewegbaren Einrichtung (12, 12') erfaßt,
einem Koppelanschluß zum Anschließen einer elektrischen Kopplungsvorrichtung (Ü, Ü'), welche die Modulatoreinheit (44, 44') und eine Auswerteeinheit (46, 46') zum Überwachen der bewegbaren Einrichtung (12,12') koppelt,
und mit einer Baugruppe (52, 56 bis 64; 52, 56' bis 64', 56" bis 64"), die bei einem vorgegebenen Sensorsignal der Sensoreinheit (16, 16', 16") ein entweder in der Modulatoreinheit (44, 44') erzeugtes oder an der Kopplungseinrichtung (Ü, Ü') auf der Seite der Auswerteeinheit (46, 46') anliegendes Trägersignal (PS) moduliert,
wobei die Baugruppe (52, 56 bis 64) so aufgebaut ist, daß das Trägersignal (PS) bei einem vom vorgegebenen Sensorsignal abweichenden Sensorsignal nicht moduliert wird.

4. Vorrichtung (10, 10') nach einem der vorhergehenden Ansprüche, wobei die elektrische Kopplungsvorrichtung (Ü, Ü') auf der Seite der Auswerteeinheit (46, 46') eine erste Induktivität (28) und auf der Seite der Modulatoreinheit (44, 44') eine zweite Induktivität (30) enthält,
und wobei eine vorzugsweise längs des Weges verlaufende Leiterschteife (26) die beiden Induktivitäten (28, 30) koppelt.

5. Vorrichtung (10, 10') nach Anspruch 4, wobei der Signalgenerator (38, 38') zum Erzeugen des Trägersignals (PS) auf der Seite der Auswerteeinheit (46, 46') angeordnet ist.

6. Vorrichtung (10, 10') nach Anspruch 5, wobei die Modulatoreinheit (44, 44') eine Spannungsversorgungsbaugruppe (54, 54') enthält, die aus dem über die Kopplungsvorrichtung (Ü, Ü') übertragenen Trägersignal (PS) eine hinreichend stabile Versorgungsspannung (Uc) erzeugt.

7. Vorrichtung (10a) nach einem der vorhergehenden Ansprüche, wobei eine erste Modulatoreinheit (44a) das Trägersignal (PS) mit einer ersten Frequenz moduliert und daß mindestens eine weitere Modulatoreinheit (44b) das Trägersignal (PS) mit einer von der ersten Frequenz abweichenden weiteren Frequenz moduliert.

8. Vorrichtung (10a) nach Anspruch 7, wobei die Modulatoreinheiten (44a, 44b) den gleichen Leistungsbedarf haben.

9. Vorrichtung (10a) nach einem der vorhergehenden Ansprüche, wobei der Signalgenerator (38) eine Endstufe größerer Ausgangsleistung enthält, vorzugsweise eine Gegentakt-Endstufe.

10. Vorrichtung (10a) nach einem der vorhergehenden Ansprüche, wobei die Modulatoreinheit (44a, 44b) ein Abschlußelement (RL) enthält, vorzugsweise ein Widerstand, das bei ausgeschalteter Modulation mit einer Schaltvorrichtung (300, 300') auf der Seite der Kopplungsvorrichtung (Ü, Ü') wirksam geschaltet wird.

11. Vorrichtung (10, 10') nach einem der vorhergehenden Ansprüche, wobei die Modulatoreinheit (44, 44') mindestens einen Modulationssignalgenerator enthält, der abhängig vom Schaltzustand der mit ihm verbundenen Sensoreinheit (16, 16', 16") ein Modulationssignal (U4, U3', U3") mit einer die verbundene Sensoreinheit (16, 16', 16") kennzeichnenden Modulationsfrequenz erzeugt.

12. Vorrichtung (10, 10') nach Anspruch 11, wobei der Modulationssignalgenerator einen Oszillator (56, 56', 56") enthält, der vorzugsweise ein Sägezahnsignal (US, US', US") mit vorzugsweise der zweifachen kennzeichnenden Modulationsfrequenz erzeugt,
der Ausgang des Oszillators (56) mit dem einen Eingang und die Sensoreinheit (16) mit dem anderen Eingang einer Vergleichseinheit (58,' 58', 58") zum Vergleich der Spannungen oder Stromwerte an ihren Eingängen verbunden sind,
und wobei der Ausgang der Vergleichseinheit (58, 58', 58") mit einer Signalformungseinheit verbunden ist, die dem Modulationssignal einen rechteckförmigen Signalverlauf mit fest vorgegebenem Tastverhältnis gibt.

13. Vorrichtung (10, 10') nach Anspruch 12, wobei die Signalformungseinheit zwei in Reihe geschaltete Speicherelemente (62, 64) zum Speichern von Schaltzuständen enthält, vorzugsweise zwei Flipflops.

14. Vorrichtung (10, 10') nach einem der Ansprüche 11 bis 13, wobei die Modulatoreinheit (44') eine Überlagerungseinrichtung (160) zum Überlagern mehrerer Modulationssignale enthält, vorzugsweise eine NICHT-ODER-Verknüpfung.

15. Vorrichtung (10, 10') nach einem der vorhergehenden Ansprüche, wobei
die Auswerteeinheit (46, 46') einen Demodulator (170) enthält, der das Modulationssignal oder die überlagerten Modulationssignale vom Trägersignal trennt,
und wobei in der Auswerteeinheit mindestens eine eingangsseitig mit dem Ausgang des Demodulators verbundene Synchronisierschaltung (174, 176) vorhanden ist, die beim Erfassen eines Modulationssignals mit einer bestimmten Modulationsfrequenz ein vorgegebenes Ausgangssignal abgibt.

16. Vorrichtung (10a) nach einem der Ansprüche 1 bis 14, wobei die Auswerteeinheit (46a) einen Demodulator (170a) enthält, der das Modulationssignal oder die überlagerten Modulationssignale vom Trägersignal (PS) trennt,
und wobei in der Auswerteeinheit (46a) mindestens eine eingangsseitig mit dem Ausgang des Demodulators verbundene digitale Filterschaltung vorhanden ist.

17. Vorrichtung (10, 10') nach einem der vorhergehenden Ansprüche, wobei die Auswerteeinheit (46) eine Vergleichseinheit (100) zum Vergleich der Spannungswerte an ihrem Eingang enthält,
an einem Eingang der Vergleichseinheit (100) das modulierte oder unmodulierte Trägersignal unter Zwischenschalten einer Klemmschaltung anliegt,
an dem anderen Eingang der Vergleichseinheit (100) ein Referenzsignal (M) anliegt,
und wobei der Ausgang der Vergleichseinheit mit einer Signalformungseinheit verbunden ist, die die Überwachungssignale erzeugt.

18. Vorrichtung (10, 10') nach Anspruch 17, wobei die Signalformungseinheit einen ersten monostabilen Multivibrator(102) enthält, dessen Schaltdauer etwa der Periodendauer des Trägersignals (PS) entspricht,
und wobei die Signalformungseinheit in Reihe geschaltet zum ersten Multivibrator (102) einen zweiten monostabilen Multivibrator (104) enthält, dessen Schaltdauer etwa der Periodendauer des Modulationssignals entspricht.

19. Vorrichtung (10, 10') nach einem der vorhergehenden Ansprüche, wobei die Sensoreinheit (16, 16', 16") einen mechanischen Schalter (16, 20; 18', 20') oder einen elektronischen Schalter, vorzugsweise eine Lichtschranke enthält, wobei vorzugsweise die Modulationsfrequenz von der Schaltfrequenz der Lichtschranke abhängt.

## Claims

1. A device (10, 10') for monitoring a movable appliance (12, 12'),
with at least one sensor unit (16, 16', 16") that is mounted on the movable appliance (12, 12') and serves for detecting obstacles in the path of the movable appliance (12, 12'),
with at least one modulator unit (44, 44') that is mounted on the movable appliance (12, 12') and modulates a carrier signal (PS) when the sensor unit (16, 16', 16") delivers a predetermined sensor signal,
with an electric coupling device (Ü, Ü') for electrically coupling the modulator unit (44, 44') and an evaluation unit (46, 46') that generates a first monitoring signal for monitoring the movable appliance (12, 12') at its input when a modulation detected,
and with a signal generator (38) for generating the carrier signal (PS) that either forms part of the modulator unit (44, 44') or is connected to the coupling device (Ü, Ü') on the side of the evaluation unit (46, 46'),
wherein the modulator unit (44, 44') is realized in such a way that the carrier signal (PS) is not modulated when
the sensor signal deviates from the predetermined sensor signal,
and wherein the evaluation unit (46, 46') generates a second monitoring signal that differs from the first monitoring signal when a non-modulated carrier signal (PS) is detected.

2. The device (10, 10') according to Claim 1,
with a coupling terminal for connecting an electric coupling device (Ü, Ü') that electrically couples the evaluation unit (46, 46') and a modulator unit (44, 44') that is mounted on the movable appliance (12, 12') and serves for modulating a carrier signal (PS), wherein the modulator unit (44, 44') modulates the carrier signal (PS) in dependence on the sensor signal of at least one sensor unit (16, 16', 16") for detecting obstacles in the path of the movable appliance (12, 12'),
and with a component assembly (10-104; 170-176) that generates a first monitoring signal for monitoring the movable appliance (12, 12') at its input when a modulation is detected,
wherein the component assembly (10-104; 170-176) generates a second monitoring signal that differs from the first monitoring signal when a non-modulated carrier signal is detected.

3. The device (10, 10') according to Claim 1,
with a mounting device for mounting the modulator unit on a movable appliance (12, 12'),
with at least one sensor terminal (21a, 21b) for connecting a sensor unit (16, 16', 16") that detects obstacles in the path of the movable appliance (12, 12'),
with a coupling terminal for connecting an electric coupling device (Ü, Ü') that couples the modulator unit (44, 44') and an evaluation unit (46, 46') for monitoring the movable appliance (12, 12'),
and with a component assembly (52, 56-64; 52, 56'-64', 56"-64") for modulating a carrier signal (PS) that is either generated in the modulator unit (44, 44') or fed to the coupling device (Ü, Ü') on the side of the evaluation unit (46, 46') when the sensor unit (16, 16', 16") delivers a predetermined sensor signal,
wherein the component assembly (52, 56-64) is designed such that the carrier signal (PS) is not modulated when the sensor signal deviates from the predetermined sensor signal.

4. The device (10, 10') according to one of the preceding claims, wherein the electric coupling device (Ü, Ü') contains a first inductor (28) on the side of the evaluation unit (46, 46') and a second inductor (30) on the side of the modulator unit (44, 44'),
and wherein both inductors (28, 30) are coupled by means of a conductor loop (26) that preferably extends along the path.

5. The device (10, 10') according to Claim 4, wherein the signal generator (38, 38') for generating the carrier signal (PS) is arranged on the side of the evaluation unit (46, 46').

6. The device (10, 10') according to Claim 5, wherein the modulator unit (44, 44') contains a voltage supply module (54, 54') that generates a sufficiently stable supply voltage (Uc) from the carrier signal (PS) transmitted via the coupling device (Ü, Ü').

7. The device (10a) according to one of the preceding claims, wherein a first modulator unit (44a) modulates the carrier signal (PS) with a first frequency, and
wherein at least one additional modulator unit (44b) modulates the carrier signal (PS) with another frequency that differs from the first frequency.

8. The device (10a) according to Claim 7, wherein the modulator units (44a, 44b) have the same power requirement.

9. The device (10a) according to one of the preceding claims, wherein the signal generator (38) has an output stage of higher output power, preferably a push-pull output stage.

10. The device (10a) according to one of the preceding claims, wherein the modulator unit (44a, 44b) has a terminating element (RL), preferably a resistor, that is switched into the active state when the modulation is switched off, namely by means of a switchgear (300, 300') on the side of the coupling device (Ü, Ü').

11. The device (10, 10') according to one of the preceding claims, wherein the modulator unit (44, 44') contains at least one modulation signal generator that, depending on the switching state of the sensor unit (16, 16', 16") connected thereto, generates a modulation signal (U4, U3', U3") with a modulation frequency that characterizes the connected sensor unit (16, 16', 16").

12. The device (10, 10') according to Claim 11, wherein the modulation signal generator contains an oscillator (56, 56', 56") that preferably generates a saw-tooth signal (US, US', US") with preferably twice the characterizing modulation frequency,
wherein the output of the oscillator (56) is connected to one input and the sensor unit (16) is connected to the other input of a comparison unit (58, 58', 58") for comparing the voltages or current values at its inputs,
and wherein the output of the comparison unit (58, 58', 58") is connected to a signal shaping unit that provides the modulation signal with a square signal waveform with a defined pulse duty factor.

13. The device (10, 10') according to Claim 12, wherein the signal shaping unit contains two series-connected storage elements (62, 64) for storing switching states, preferably two flip-flops.

14. The device (10, 10') according to one of Claims 11-13,
wherein the modulator unit (44') contains a superposition device (160) for superimposing several modulation signals, preferably a NOR function.

15. The device (10, 10') according to one of the preceding claims, wherein the evaluation unit (46, 46') contains a demodulator (170) that separates the modulation signal or the superimposed modulation signals from the carrier signal,
and wherein the evaluation unit contains at least one synchronization circuit (174, 176), the input of which is connected to the output of the demodulator, wherein said synchronization circuit delivers a predetermined output signal when a modulation signal with a certain modulation frequency is detected.

16. The device (10a) according to one of Claims 1-14,
wherein the evaluation unit (46a) contains a demodulator (170a) that separates the modulation signal or the superimposed modulation signals from the carrier signal (PS),
and wherein the evaluation unit (46a) contains at least one digital filter circuit, the input of which is connected to the output of the demodulator.

17. The device (10, 10') according to one of the preceding claims, wherein the evaluation unit (46) contains a comparison unit (100) for comparing the voltage values at its input,
wherein the modulated or non-modulated carrier signal is fed to one input of the comparison unit (100) via a clamp circuit,
wherein a reference signal (M) is fed to the other input of the comparison unit (100),
and wherein the output of the comparison unit is connected to a signal shaping unit that generates the monitoring signals.

18. The device (10, 10') according to Claim 17, wherein the signal shaping unit contains a first monostable multivibrator (102), the switching time of which approximately corresponds to the period of the carrier signal (PS),
and wherein the signal shaping unit contains a second monostable multivibrator (104) that is connected in series to the first multivibrator (102) and the switching time of which approximately corresponds to the period of the modulation signal.

19. The device (10, 10') according to one of the preceding claims, wherein the sensor unit (16, 16', 16") contains a mechanical switch (16, 20; 18', 20') or an electronic switch, preferably a light barrier, and
wherein the modulation frequency is preferably dependent on the switching frequency of the light barrier.

## Revendications

1. Dispositif (10, 10') de surveillance d'une installation mobile (12, 12')
avec au moins une unité de capteurs (16, 16', 16") fixée sur l'installation mobile (12 12') pour détecter des obstacles dans le trajet de l'installation mobile (12, 12'),
au moins une unité modulatrice (44, 44') fixée sur l'installation mobile (12, 12') qui pour un signal de capteur prédéfini délivré par l'unité de capteurs (16, 16', 16") module un signal porteur (PS),
un dispositif d'accouplement électrique (Ü, Ü') pour l'accouplement électrique de l'unité modulatrice (44 44') et d'une unité d'évaluation (46, 46'), qui lors de la détection d'une modulation génère sur son entrée un premier signal de surveillance pour la surveillance de l'installation mobile (12, 12'),
et avec un générateur de signaux (38) pour la génération du signal porteur (PS), qui est soit contenu dans l'unité modulatrice (44, 44') ou connecté sur le dispositif d'accouplement (Ü, Ü') du côté de l'unité d'évaluation (46, 46'),
l'unité modulatrice (44, 44') étant conçue de façon à ce que le signal porteur (PS) ne soit pas modulé lorsque le signal du capteur est différent d'un signal de capteur prédéfini,
et l'unité d'évaluation (46, 46') générant un deuxième signal de surveillance différent du premier signal de surveillance lors de la détection du signal porteur (PS) non modulé.

2. Dispositif (10, 10') selon le revendication 1,
avec une connexion d'accouplement pour connecter un dispositif d'accouplement électrique (Ü, Ü') qui accouple électriquement l'unité d'évaluation (46, 46') et une unité modulatrice (44, 44') fixée sur une installation mobile (12, 12') pour moduler un signal porteur (PS), l'unité modulatrice (44, 44') modulant le signal porteur (PS) indépendamment du signal de capteur délivré par au moins une unité de capteurs (16, 16', 16") pour détecter des obstacles dans le trajet de l'installation mobile (12, 12'),
et avec un ensemble (10 à 104 ; 170 à 176), qui lors de la détection d'une modulation sur son entrée génère un premier signal de surveillance pour la surveillance de l'installation mobile (12, 12'),
lors de la détection du signal porteur non modulé, l'ensemble (10 à 104 ; 170 à 176) générant un deuxième signal de surveillance différent du premier signal de surveillance.

3. Dispositif (10, 10') selon le revendication 1,
avec un système de fixation pour fixer l'unité modulatrice sur une installation mobile (12, 12'),
avec au moins une connexion de capteurs (21a, 21b) pour connecter une unité de capteurs (16, 16', 16") qui détecte des obstacles dans le trajet de l'installation mobile (12, 12'),
avec une connexion d'accouplement pour connecter un dispositif d'accouplement électrique (Ü, Ü') qui accouple l'unité modulatrice (44, 44') et une unité d'évaluation (46, 46') pour la surveillance de l'installation mobile (12, 12'),
et avec un ensemble (10 à 104 ; 170 à 176), qui pour un signal prédéfini de capteur délivré par l'unité de capteurs (16, 16', 16") module un signal porteur (PS) qui est soit généré dans l'unité modulatrice (44, 44') ou appliqué sur le dispositif d'accouplement (Ü, Ü'), du côté de l'unité d'évaluation (46, 46'),
l'ensemble (10 à 104 ; 170 à 176) étant conçu de façon à ce que le signal porteur (PS) ne soit pas modulé si le signal délivré par les capteurs est différent d'un signal de capteur prédéfini.

4. Dispositif (10, 10') selon l'une quelconque des revendications précédentes, le dispositif d'accouplement électrique (Ü, Ü') contenant une première inductance (28) du côté de l'unité d'évaluation (46 46') et une deuxième inductance (30) du côté de l'unité modulatrice (44, 44'),
et une boucle de conducteurs (26) s'étendant de préférence le long du trajet accouplant les deux inductances (28, 30).

5. Dispositif (10, 10') selon la revendication 5, le générateur de signaux (38, 38') étant disposé du côté de l'unité d'évaluation (46, 46') pour la génération du signal porteur (PS).

6. Dispositif (10, 10') selon la revendication 5, l'unité modulatrice (44, 44') contenant un ensemble d'alimentation en tension (54, 54') qui à partir du signal porteur (PS) transmis par l'intermédiaire du dispositif d'accouplement (Ü, Ü') génère une tension d'alimentation (Uc) suffisamment stable.

7. Dispositif (10a) selon l'une quelconque des revendications précédentes, une première unité modulatrice (44a) modulant le signal porteur (PS) à une première fréquence et au moins une unité modulatrice supplémentaire (44b) modulant le signal porteur (PS) à une autre fréquence différente de la première fréquence.

8. Dispositif (10a) selon la revendication 7, les unités modulatrices (44a, 44b) ayant les mêmes besoins en énergie.

9. Dispositif (10a) selon l'une quelconque des revendications précédentes, le générateur de signaux (38) contenant un étage final avec une puissance de sortie supérieure, de préférence un étage final symétrique.

10. Dispositif (10a) selon l'une quelconque des revendications précédentes, l'unité modulatrice (44a, 44b) contenant un élément de terminaison (RL), de préférence une résistance qui lorsque la modulation est hors circuit est commuté de façon efficace par le dispositif de commutation (300, 300') du côté du dispositif d'accouplement (Ü, Ü').

11. Dispositif (10, 10') selon l'une quelconque des revendications précédentes, l'unité modulatrice (44, 44') contenant au moins un générateur de signaux de modulation, qui indépendamment de l'état de commutation de l'unité de capteurs (16, 16', 16") à laquelle il est relié délivre un signal de modulation (U4, U3', U3") à une fréquence de modulation caractérisant l'unité de capteurs (16, 16', 16") à laquelle il est relié.

12. Dispositif (10, 10') selon la revendication 11, le générateur de signaux de modulation contenant un oscillateur (56, 56', 56"), qui délivre de préférence un signal en dents de scie (US, US', US") de préférence au double de la fréquence de modulation caractéristique,
la sortie de l'oscillateur (56) étant reliée à l'une des entrées et l'unité de capteurs (16) étant reliée à l'autre entrée d'une unité de comparaison (58, 58', 58"), pour comparer les tensions ou les valeurs de courant sur ses entrées,
et la sortie de l'unité de comparaison (58, 58', 58") étant reliée à une unité de conformation de signaux qui confère au signal de modulation un trajet de signal rectangulaire avec un facteur d'utilisation des impulsions fixement prédéfini.

13. Dispositif (10, 10') selon la revendication 12, l'unité de conformation de signaux contenant deux éléments de mémoire (62, 64) montés en série, pour mémoriser des états de commutation, de préférence deux bascules.

14. Dispositif (10, 10') selon l'une quelconque des revendications 11 à 13, l'unité modulatrice (44') contenant un système hétérodyne (160), pour l'hétérodynage de plusieurs signaux de modulation, de préférence un enchaînement NON-OU.

15. Dispositif (10, 10') selon l'une quelconque des revendications précédentes, l'unité d'évaluation (46, 46') contenant un démodulateur (170) qui sépare le signal de modulation ou les signaux de modulation hétérodynes du signal porteur,
et au moins un circuit de synchronisation (174, 176), relié côté entrée avec la sortie du démodulateur et qui lors de la détection d'un signal de modulation avec une certaine fréquence de modulation délivre un signal de sortie prédéfini étant présent dans l'unité d'évaluation.

16. Dispositif (10, 10') selon l'une quelconque des revendications 1 à 14, l'unité d'évaluation (46a) contenant un démodulateur (170a) qui sépare le signal de modulation ou les signaux de modulation hétérodynes du signal porteur (PS),
et au moins un circuit de filtrage numérique relié côté entrée avec la sortie du démodulateur étant présent dans l'unité d'évaluation (46a).

17. Dispositif (10, 10') selon l'une quelconque des revendications précédentes, l'unité d'évaluation (46) contenant une unité de comparaison (100) pour comparer les valeurs de tension sur son entrée,
sur une entrée de l'unité de comparaison (100), le signal porteur modulé ou non modulé étant appliqué sous intercalage d'un circuit de blocage,
un signal de référence (M) étant appliqué sur l'autre entrée de l'unité de comparaison (100),
et la sortie de l'unité de comparaison étant reliée à une unité de conformation de signaux, qui génère les signaux de surveillance.

18. Dispositif (10, 10') selon la revendication 17, l'unité de conformation de signaux contenant un premier multivibrateur monostable (102), dont la durée de commutation correspond approximativement à la durée périodique du signal porteur
et l'unité de conformation de signaux contenant un deuxième multivibrateur monostable (104) monté en série par rapport au premier multivibrateur (102), dont la durée de commutation correspond approximativement à la durée périodique du signal de modulation.

19. Dispositif (10, 10') selon l'une quelconque des revendications précédentes, l'unité de capteurs (16, 16', 16") contenant un commutateur mécanique (16, 20, 18', 20') ou un commutateur électronique, de préférence une barrière lumineuse, la fréquence de modulation dépendant de préférence de la fréquence de commutation de la barrière lumineuse.
